# EUROPÄISCHE PATENTSCHRIFT

(11) **EP 3 138 867 B1**
(45) Veröffentlichungstag und Bekanntmachung des Hinweises auf die Patenterteilung: **02.10.2019**
(21) Anmeldenummer: 16182680.5
(22) Anmeldetag: 04.08.2016
(51) Int. Cl.: C08G 77/46, C08G 77/00

(54) **VERWENDUNG VON EUGENOL-POLYETHERN UND EUGENOL-POLYETHERSILOXANEN ALS NETZMITTEL**
USE OF EUGENOL POLYETHERS AND EUGENOL POLYETHER SILOXANES AS WETTING AGENTS
UTILISATION DE POLYETHERS D'EUGENOL ET POLYETHERSILOXANES D'EUGENOL EN TANT QU'AGENT MOUILLANT

(30) Priorität: 03.09.2015 EP 15183632
(43) Veröffentlichungstag der Anmeldung: 08.03.2017
(73) Patentinhaber: Evonik Degussa GmbH, 45128 Essen (DE)
(72) Erfinder: Roland, Katrin, 45257 Essen (DE); Lobert, Matthias, 45309 Essen (DE); Ferenz, Michael, 45147 Essen (DE); Schierle, Thorsten, 45289 Essen (DE)
(74) Vertreter: Evonik Patent Association

(56) Entgegenhaltungen:
- EP-B1- 0 094 386
- Y BARAKAT ET AL: "Chemistry and Materials Research Salinity-Alkane Carbon Number (ACN) Relationship of Some Anionic Nonionic Surfactant Mixtures", CHEMISTRY AND MATERIALS RESEARCH, Bd. 6, 1. Januar 2014 (2014-01-01), Seiten 55-77, XP055248931, ISSN: 2224-3224

## Beschreibung

Die vorliegende Erfindung betrifft die Verwendung von Eugenol-Polyethern sowie Polyethersiloxanen basierend auf diesen Eugenol-Polyethern als Substratnetzmittel.

Wasserbasierte Farben und Lacke werden in großem Maßstab industriell verwendet. Maßgeblich für eine gute Benetzung des Substrates ist es, dass die Oberflächenspannung des wässrigen Systems mit Hilfe eines Tensids abgesenkt wird. Dabei ist es nicht nur entscheidend, dass die statische Oberflächenspannung auf einen niedrigen Wert abgesenkt wird, sondern auch die dynamische. Insbesondere ist eine geringe dynamische Oberflächenspannung für Hochgeschwindigkeits-Applikationen erforderlich, z.B. beim Aufsprühen von Beschichtungen oder im Bereich von Druckprozessen. Darüber hinaus dürfen die verwendeten Tenside die Ausbildung eines gleichmäßigen Filmes nicht stören, keine Trübung verursachen und sie sollten schwach schäumend sein, d.h. den Aufbau großer Mengen von Schaum nicht begünstigen.

Gerade bei der Verwendung solcher Tenside im Bereich der Bedruckung von Lebensmittelverpackungen existieren sehr hohe Anforderungen an die eingesetzten Stoffe hinsichtlich ihrer Migrierfähigkeit in das Lebensmittel. Um eine Aufnahme derartiger Stoffe in den menschlichen Körper zu vermeiden, dürfen diese gar nicht oder nur geringfügig migrierfähig sein. Demzufolge erfordert die Synthese solcher Tenside eine sehr genaue Auswahl der Rohstoffe. Schon die Basiskomponenten sollten toxikologisch unbedenklich sein. Insbesondere wichtig ist, dass die Ausgangsmaterialien, falls sie in der Reaktion zum Tensid nicht vollständig umgesetzt werden und damit noch im Produkt vorhanden sind, auch in kleinen Mengen nicht toxisch sind und eine geringe Migration in die Lebensmittel aufweisen.

Die im Stand der Technik bekannten Netzmittel erfüllen in der Regel das Kriterium der Lebensmittelkonformität und der geringen Migration gar nicht oder nur bedingt.

Eine häufig verwendete Tensidklasse sind die Fluortenside. Sie zeichnen sich durch eine sehr starke Senkung der statischen Oberflächenspannung aus, neigen aber dazu stark zu schäumen. DE102011052991B4 beschreibt beispielsweise die Verwendung von Fluortensiden im wasserlosen Offsetdruck zur Benetzung der schwer benetzbaren Druckplatte. In DE102009032615A1 wird die Verwendung von Fluortensiden in Schreibtintenformulierungen beschrieben, die für Easy Clean-, also ebenfalls schwer benetzbare, Oberflächen eingesetzt werden können. Erst kürzlich wurde die Verwendung von fluorhaltigen Tensiden stark eingeschränkt. Perfluortenside (PFT) wurden ubiquitär nachgewiesen und sind vor allem im Trinkwasser zu finden. Die Halbwertszeit dieser Substanzen im menschlichen Körper ist sehr lang, so dass es zu einer Anreicherung im Organismus kommt.

Eine weitere häufig verwendete Klasse von Tensiden basiert auf acetylenischen Glykolen und ihren Alkoxylaten. Mit diesen Tensiden ist es möglich, sowohl die statische als auch die dynamische Oberflächenspannung zu reduzieren, wobei die erreichbaren Werte nicht ganz an die der nichtionischen und anionischen Tenside heranreichen. Dafür sind Formulierungen mit diesen Tensiden vergleichsweise schaumarm (EP-B-0 897 744, US-2 997 447). WO 2014/098001 A1 beschreibt beispielsweise den Einsatz von acetylenischen Tensiden für die Verwendung in Ink Jet Druckfarben.

Problematisch ist die (öko-)toxikologische Bewertung von Produkten auf Basis von 2,4,6,8-Tetramethyl-5-decindiol. Die Produkte führen zu schweren Augenreizungen, sind als sensibilisierend bei Hautkontakt eingestuft und reichern sich in Gewässern an. Dem Lackhersteller stehen aus dieser Substanzklasse entweder nur feste Produkte zur Verfügung oder die Substanz wird für eine einfache Handhabung als 50 %ige Lösung in verschiedenen Lösungsmitteln wie z.B. Ethylenglycol (Einstufung als gesundheitsschädlich, mit Verdacht auf fruchtschädigende Wirkung) angeboten.

Weiterhin kommen Ethoxylate oder Ethylenoxid-Propylenoxid-Copolymere von Octyl- oder Nonylphenolen als Tenside zur Senkung der Oberflächenspannung zum Einsatz. Beispielsweise beschreibt US 2014/0078217 A1 die Verwendung von Nonylphenolethoxylaten für ein Fixierungsfluid zur Bedruckung von nicht-porösen Oberflächen.

Auch bei Tensiden dieser Klasse müssen jedoch ökotoxikologische Erkenntnisse berücksichtigt werden. Die Edukte der eingesetzten Ethoxylat-Tenside, also Octyl- und Nonylphenol, greifen erwiesenermaßen in den Hormonstoffwechsel von Fischen ein. Entsprechend sind die Ausgangsstoffe, sowie auch die Tenside selbst als wassergefährdend eingestuft und in vielen Anwendungen bereits verboten. Der Einsatz dieser Stoffe in Lacken und Farben ist derzeit noch erlaubt. Aufgrund verschiedener Regularien ist ihre Verwendung im Lebensmittelverpackungsdruck jedoch bereits untersagt.

Die Veröffentlichung "Salinity-Alkane Carbon Number (ACN) Relationship of Same Anionic Nonionic Surfactant Mixtures", Y BARAKA T ET AL, offenbart die Verwendung von Eugenol-basierten Polyethern bei der Erdölgewinnung, bei der sog. Enhanced Oil Recovery (EOR). Durch Einbringen einer wässrigen Tensidpolymerlösung oder bereits vorgebildeten Mikroemulsion (mizellares Fluten) werden die Oberflächenspannung Öl/Wasser derart verringert, dass Öl lokal mobilisiert, teilweise solubilisiert, wird und zu Ölbänken zusammenfließen kann.

EP 0 094 386 B1 offenbart die Verwendung von Eugenol-basierten Polyethern bei der Herstellung von Dispersionspolymerisaten als "stabilisierende" Verbindung, um das Gemisch aus einem vorgebildeten Polymeren, einem in situ gebildeten Polymeren und Wasser zu stabilisieren.

Aufgabe der vorliegenden Erfindung war es daher Substratnetzmittel bereitzustellen, welche die engen Vorgaben für Additive mit Lebensmittelkontakt erfüllen, die gleichzeitig stabile, homogene Verbindungen sind.

Überraschenderweise wurde nun gefunden, dass Eugenol-basierte Polyether, im Folgenden auch als Eugenol-Polyether bezeichnet, sowie die daraus hergestellten Polyethersiloxane alle gestellten Anforderungen erfüllen und sich hervorragend als Substratnetzmittel eignen. Unter Eugenol-basiertem Polyether wird erfindungsgemäß ein Polyether aus mindestens drei Alkoxyeinheiten verstanden, der mit Eugenol als alkoholischem Starter hergestellt wurde. Ein Verfahren zu deren Herstellung wird in der noch nicht veröffentlichen Patentanmeldung mit dem Anmeldeaktenzeichen DE 102014217790.1 beschrieben. Die DE 102014217790.1 wird hiermit als Referenz eingeführt und gilt als Teil des Offenbarungsgehaltes der vorliegenden Patentanmeldung.

Grenzflächenaktive Polyether, die auf aromatischen Alkoholen, sprich Phenolen, als Starter beruhen, sind hinlänglich bekannt wie zum Beispiel in US 5296627 A oder US 6646091 B2 beschrieben.

Die Schriften EP 94386 B1 und DE 3342509 A1 beschreiben Zusammensetzungen, welche Eugenol-basierte Polyether enthalten.

Eine erstmalige detaillierte Beschreibung der alkalisch katalysierten Alkoxylierung von Eugenol erfolgt in EP 1717259 A1. In den dort ausgeführten Beispielen wird Eugenol als Starter vorgelegt und zunächst mit einem alkalischen Katalysator wie Natriummethylat versetzt. Nach Entfernung des Methanols aus diesem Katalyseschritt werden bei Temperaturen von 140-160°C Ethylen-, Propylen- und/oder Butylenoxid angelagert. Diese Verfahrensweise führt nachweislich zu reinen Isoeugenol-basierten Polyethern, sprich die Allyl-Gruppe des Eugenols lagert während der alkalischen Alkoxylierung quantitativ in eine 2-Propenyl-Gruppe um. Die so resultierende Struktureinheit ist dem Fachmann unter dem Namen Isoeugenol bekannt. Eine Verwendung derartiger Eugenol-Polyether als Netzmittel wird nicht beschrieben.

Auch Polyethersiloxane, die Eugenol-Gruppen tragen, sind prinzipiell aus der wissenschaftlichen Literatur bekannt. Die Bezeichnung Polyethersiloxan rührt in diesen Fällen daher, dass in der Regel neben Eugenol auch herkömmliche terminal ungesättigte Polyether wie z.B. Alkoxylate von Allylalkoholen an die SiH-tragenden Alkyl-Polysiloxane hydrosilyliert werden, in einzelnen Fällen auch zusätzlich noch mit weiteren terminal ungesättigten Verbindungen wie z.B. Alkenen. Wie in EP 1010748 B1, EP 887367 A3 oder EP 845520 B1 beschrieben, werden derartige Eugenol-enthaltende Polyethersiloxane beispielsweise als Dieselentschäumer eingesetzt. Eine Verwendung als Netzmittel ist nicht vorbeschrieben.

Die im Stand der Technik mittels Hydrosilylierung beschriebene Herstellung von Polyethersiloxanen, welche Eugenol- und Polyether-Gruppen tragen, hat den verfahrenstechnischen Nachteil, dass gleichzeitig mehrere ungesättigte Produkte an das SiH-tragende Polyethersiloxan angelagert werden müssen. Da sich die Reaktanden wie Eugenol und der oder die anzulagernden Polyether (und natürlich auch das SiH-tragende Polysiloxan) sowohl durch ihr Molekulargewicht als auch durch ihre hydrophilen bzw. hydrophoben Charaktere signifikant unterscheiden, wird die Herstellung eines einheitlich zusammengesetzten Polyethersiloxans, in dem die unterschiedlichen Reaktanden gleichmäßig auf alle Siloxanketten verteilt sind, erschwert. Mangelhafte Durchmischung führt so schnell zu inhomogen zusammengesetzten Produkten, was aus Qualitäts- und Kostengründen unbedingt vermieden werden sollte.

In den Netzmitteln der vorliegenden Erfindung konnten der aromatische Charakter des hydrosilylierfähigen Eugenols mit dem flexibel einstellbaren hydrophilen bzw. hydrophoben Charakter eines Polyethers in einem Molekül/Polymer vereint werden.

Als Substratnetzmittel auf reiner Polyetherbasis kann prinzipiell jeder Eugenol-Polyether, hergestellt nach beliebigen Verfahren des Stands der Technik, eingesetzt werden. Die Eugenol-Polyether, welche an SiH-tragende Polysiloxane hydrosilyliert werden, um Eugenol-Polyethersiloxane zu erhalten, werden bevorzugt mittels übergangsmetallkatalysierter Alkoxylierung von Eugenol hergestellt, insbesondere bevorzugt mittels Doppelmetallcyanid-Katalyse. Dies liegt darin begründet, dass die alkalisch katalysierte Alkoxylierung von Eugenol nachweislich zu Isoeugenol-basierten Polyethern führt (vide infra), und diese nicht hydrosilylierfähig sind.

Dem Umstand Rechnung tragend, dass die durch die alkalisch katalysierte Alkoxylierung von Eugenol erhaltenen Isoeugenol-Polyether auch den erfindungsgemäßen Anspruch erfüllen, werden im Folgenden bei der Verwendung der Bezeichnung Eugenol-Polyether als Netzmittel auch explizit Isoeugenol-Strukturen mit eingeschlossen, ohne dass an der jeweiligen Textstelle explizit darauf verwiesen wird.

Im Rahmen der vorliegenden Erfindung umfasst der Begriff Alkoxylierungsprodukte oder Polyether sowohl Polyether, Polyetherole, Polyetheralkohole, Polyetheresterole aber auch Polyethercarbonatole, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die Bezeichnung "Eugenol-basierter Polyether" beschreibt demnach nicht exklusiv Alkoxylate, sondern umfasst auch Umsetzungsprodukte von Eugenol, wo neben Alkylenoxiden weitere unter Ringöffnung (co)polymerisierbare Monomere umgesetzt werden, wie im Folgenden näher ausgeführt.
Gegenstand der vorliegenden Erfindung ist die Verwendung Eugenol-basierter Polyether und/oder Eugenol-basierter Polyethersiloxane, insbesondere von Verbindung(en) der nachfolgend beschriebenen Formeln (I) und/oder (II), als Substratnetzmittel.

Der erfindungsgemäße Gegenstand wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (25 °C und 1013 mbar) durchgeführt worden. Werden nachfolgend Mittelwerte angegeben, so handelt es sich, wenn nicht anders angegeben, um Gewichtsmittel.

Bevorzugt ist die Verwendung Eugenol-basierter Polyether und/oder Eugenol-basierter Polyethersiloxane, insbesondere der Formeln (I) und/oder (II), als Substratnetzmittel in Druckfarben, Drucklacken und sonstiger mittels analoger oder digitaler Beschichtungsverfahren aufgebrachter Farben, Lacken, Tinten, Farbpräparationen und Beschichtungen.

Es hat sich herausgestellt, dass erfindungsgemäße Eugenol-basierte Polyether und/oder Eugenol-basierte Polyethersiloxane, insbesondere der Formeln (I) und/oder (II) besonders gut als Substratnetzmittel in Druckfarben, Drucklacken und sonstiger mittels analoger oder digitaler Beschichtungsverfahren aufgebrachter Farben, Lacken, Tinten, Farbpräparationen und Beschichtungen geeignet sind.

Die erfindungsgemäßen Verbindungen eignen sich insbesondere als Substratnetzmittel zur Bedruckung von Folien, Papier, Karton, Wellpappe, Faltschachteln, Beuteln, Tüten, Tapeten, Säcken, Hygienepapier, Etiketten, Getränkekartons, Platten, Holzoberflächen, Metalloberflächen, Kunststoffoberflächen, Glas und/oder Keramik.

Ganz besonders gute Ergebnisse können bei der Verwendung auf Produkten der Lebensmittelindustrie erzielt werden, wie beispielsweise Verpackungen und Gebrauchsgegenstände aus Papier und Kartonagen.
Hierzu zählen insbesondere
- Wellpappe (z.B. einwellige und mehrwellige Qualitäten der industriell und im künstlerischen/gestalterischen Bereich genutzten Wellenformen (wie z.B. A-, B-, C- oder E-Welle) mit verschiedensten Deckenpapieren (wie z.B. Schrenz, braune Decke, Kraftliner, Testliner, sowie ein- und mehrfach gestrichene und ein- und mehrfachvolumige Qualitäten wie GD2 oder Kemiart Ultra),
- Faltschachteln (z.B. einseitig gestrichene Qualitäten für Verpackungen für trockene Lebensmittel, Arzneien und sonstige trockene Füllgüter, beidseitig gestrichene und/oder beschichtete Qualitäten für feuchte, fettige oder ölige Füllgüter (z.B. Tiefkühllebensmittel oder Fette)),
- Beutel (z.B. Bäckerbeutel, Papiertragetaschen, ein- und mehrlagige Beutel für trockene, feuchte und fettige Füllgüter),
- Säcke (z.B. ein- und mehrlagige Säcke für Füllgüter wie Zement, Katzenstreu, Samen oder Trockenfutter),
- Hygienepapiere (wie z.B. Servietten, Küchentücher, Kosmetiktücher und Toilettenpapiere, wobei hierbei auch Feuchttücher und getränkte Pads eingeschlossen sind),
- Getränkekartons (wie z.B. die Verpackungen der Firmen TetraPak®, SIG Combibloc® oder Elopak®) und
- sonstige aseptische Kartonverpackungen. Ebenfalls bevorzugt ist die Verwendung auf Verpackungen und Gebrauchsgegenständen aus Kunststoff. Hierzu zählen insbesondere:
- Verpackungsfolien (z.B. PE, PP, OPP, BOPP, PET, PEN (Polyethylennaphthalat z.B Teonex®), Polyester (z.B. Hostaphan® oder Melinex®), Cellulosehydratfolien (Cellophan®), PVC (Polyvinylchlorid) bis hin zu sogenannten "Biofolien" wie PLA (Polylacticacid = Polymilchsäure) einlagig oder als mehrlagige Verbunde (auch als Laminate bezeichnet),
- Schutzfolien, Trennfolien, Dekorfolien (z.B. d-c-fix® der Firma Konrad Hornschuch AG), Trägerfolien, Transferfolien, Barrierefolien, Windelfolien, medizinische Folien, funktionalisierte Folien und sonstige gebräuchliche Folien
- rigide Kunststoffmaterialien, wie Kunststoffplatten (z.B. Plexiglas® von Evonik Industries AG, Polycarbonatplatten wie Makrolon®, PVC-Platten etc.).
   Weiterhin ist auch der Einsatz auf metallischen Untergründen möglich und bevorzugt. Hierzu zählen insbesondere Aluminiumfolien oder Verbundmaterialen, die Aluminium enthalten (z.B. als Deckel für Joghurtbecher, Schalen für Fertiggerichte und Tiernahrung, Verpackungen für Medizinprodukte und ähnliche Verpackungen), sowie Verbundplatten (wie z.B. DiBond®) und Bleche (z.B. für Metallverpackungen wie Keksdosen, Schilder, Metallpaneele und ähnliche Gebrauchsgegenstände).

Zudem ist auch die Verwendung für die Bau und Möbelindustrie, insbesondere auf Plattenmaterialen, wie Fassadenplatten (z.B. unter den Markennamen Trespa® Meteon® oder Resopal® (Hochdrucklaminate) oder Eternit® (Faserzementplatten) erhältlich), Platten und Paneele für Innen- und Außenanwendungen (wie z.B. GFK (glasfaserverstärkter Kunststoff), Plexiglas®, Paneele aus Verbundmaterial oder Kunststoff (wie z.B. die PVC-Paneele der Firma Deceuninck)), Trockenbauplatten (wie z.B. Gipskartonplatten (z.B. Rigipsplatten der Firma Saint-Gobain Rigips GmbH oder Drystar-Board bzw. Aquapanel® der Firma Knauf Gips KG), Gipsfaserplatten (z.B. Fermacell® der Firma Fermacell GmbH) und sonstige wie Gipsdielen und Estrichelemente), Laminatfußbodenplatten (wie z.B. mit Dekoren versehene MDF-Platten (mitteldichte Faserplatte) der Firma Kronotex) und verschiedenste Plattentypen für den Möbel- und Innenausbau (MDF, OSB (oriented strand board, im Deutschen auch Grobspanplatten genannt), Sperrholz (Platten aus verleimten Furnierschichten), Multiplexplatten (spezielle Form der Sperrholzplatte mit unterschiedlich starken Furnierschichten und erhöhter Festigkeit), Siebdruckplatten (Sperrholzplatten mit Phenolharzbeschichtung und Siebdruckprägung), Leimholz (Platten aus verleimtem und teilweise verzapftem Vollholz) etc.) gut möglich und bevorzugt.

Weiterhin ist eine Verwendung auf Glas- und Keramikoberflächen möglich und bevorzugt. Hierzu zählen insbesondere Flaschen, Gläser und sonstige Gefäße aus Glas und keramischen Werkstoffen (z.B. Geschirr oder technische Keramiken wie Isolatoren oder Tiegel für Hochtemperaturanwendungen), weiterhin verschiedenste flache Gläser und flache keramische Werkstoffe (wie z.B. Flachglas (eben oder in verschiedensten Wölbungen), Fliesen, technische Keramiken wie Hitzeschutzkacheln), Sicherheitsgläser (wie z.B. Securit® oder Panzerglas) sowie verschiedenste vergütete bzw. beschichtete Gläser und Keramiken, darunter auch explizit technische Gläser (wie z.B. Brillengläser, Linsen Scheiben etc.).

Darüber hinaus ist der Einsatz möglich und bevorzugt in kosmetischen Produkten wie Nagellacken, sowie in Tinten, Tuschen und sonstigen Farbpräparationen für den Einsatz in bzw. die Applikation mit Füllfederhaltern, Tuschefüllern, Faserstiften, Kugelschreibern und sonstigen Schreibgeräten.

Weiterhin ist die Verwendung in Farben, Tinten, Tuschen und sonstigen Farb- und Lackpräparationen für die Applikation mittels industrieller und künstlerischer Verfahren, wie Tauchen, Spritzen, Rollen, Pinselauftrag, Stempelauftrag, Airbrush, Vorhanggießen möglich und bevorzugt.

Zudem sind die erfindungsgemäßen Eugenol-basierten Polyether und/oder Eugenol-basierten Polyethersiloxane für die Verwendung in Produkten, bei denen zum Beispiel durch Kontakt mit Kindern der Einsatz unbedenklicher Ausgangstoffe bevorzugt ist (gemäß DIN EN 71-3 und Zugeordneten), geeignet.

Die erfindungsgemäßen Eugenol-basierten Polyether, weisen vorzugsweise die in Formel (I) dargestellte Konstitution auf: 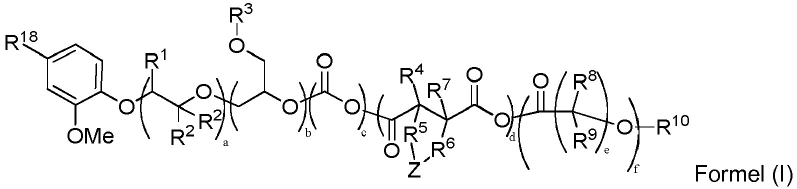 wobei
- a =: 1 bis 1000, bevorzugt 2 bis 500, besonders bevorzugt 3 bis 500, weiter bevorzugt größer 3 bis 100, insbesondere bevorzugt 4 bis 50,
- b =: 0 bis 1000, bevorzugt 1 bis 500, weiter bevorzugt größer 1 bis 200, insbesondere bevorzugt 0 bis 50,
- c =: 0 bis 1000, bevorzugt 1 bis 100, weiter bevorzugt größer 1 bis 80, insbesondere bevorzugt 0 bis 50,
- d =: 0 bis 1000, bevorzugt 1 bis 100, weiter bevorzugt größer 1 bis 80, insbesondere bevorzugt 0 bis 50
- e =: 1 bis 10,
- f =: 0 bis 500, bevorzugt 1 bis 300, besonders bevorzugt 2 bis 200 und insbesondere bevorzugt 0 bis 100 ist,
mit der Maßgabe, dass die Summe aus a + b + c + d + f größer gleich 3 sein muss und
mit der Maßgabe, dass die Gruppen mit den Indices a, b, c, d, und f frei permutierbar über die Molekülkette sind, wobei die Gruppen mit den Indices c und d jeweils nicht auf sich selbst oder auf die jeweils andere Gruppe folgen dürfen
und mit der Maßgabe, dass die verschiedenen Monomereinheiten sowohl der Fragmente mit den Indices a, b und f untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices c und d jeweils nicht auf sich selbst oder auf die jeweils andere Gruppe folgen dürfen,
und wobei
- R¹ =: unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
- R² =: unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-, oder
- R¹: und einer der Reste R² können gemeinsam einen Ring bilden, der die Atome, an die R¹ und R² gebunden sind, einschließt, bevorzugt enthält dieser Ring 5 bis 8 Kohlenstoffatome,
- R³ =: unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist, beispielsweise kann R³ auch eine Silyl-, eine Alkoxysilyl- oder eine Carbonsäureester-Gruppe enthalten, wie beispielsweise eine Dialkoxyalkylsilylgruppe oder eine Trialkoxysilylgruppe, bevorzugt eine Trimethoxysilylgruppe, eine Triethoxysilylgruppe, eine Dimethoxymethylsilylgruppe oder eine Diethoxymethylsilylgruppe,
- R⁴, R⁷ =: unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R⁴ und/oder R⁷ auch nicht vorhanden sein, wobei wenn R⁴ und R⁷ nicht vorhanden sind, statt der Reste R⁴ und R⁷ eine C=C Doppelbindung vorhanden ist,
das überbrückende Fragment Z kann vorhanden oder nicht vorhanden sein, ist das überbrückende Fragment Z nicht vorhanden so sind,
- R⁵, R⁶ =: unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R⁴ oder R⁷ nicht vorhanden ist, der jeweilige geminale Rest (also R⁵ wenn R⁴ nicht vorhanden ist und R⁶ wenn R⁷ nicht vorhanden ist) ein Alkylidenrest, bevorzugt Methyliden (=CH₂), ist,
ist das überbrückende Fragment Z vorhanden, so sind
- R⁵, R⁶ =: Kohlenwasserstoffreste, die cycloaliphatisch oder aromatisch über das Fragment Z verbrückt sind, wobei Z einen divalenten Alkylen- oder Alkenylenrest darstellt, der weiter substituiert sein kann,
- R⁸, R⁹ =: unabhängig voneinander ein Wasserstoffradikal, eine Alkylgruppe mit 1 bis 20 Kohlenstoffatomen, eine Aryl- oder Alkarylgruppe und/oder eine Alkoxygruppe, bevorzugt eine Methylgruppe,
- R¹⁰ =: unabhängig voneinander ein Wasserstoffradikal oder eine Alkylgruppe mit 1 bis 8 Kohlenstoffatomen oder eine Estergruppe -C(O)-R¹¹ oder eine Acetoacetatgruppe -C(O)-CH₂-C(O)-R¹² oder eine Silylethergruppe -Si(R¹³)₃ oder eine Urethangruppe -C(O)-N-(R¹⁴)₂ oder eine Phosphorsäuregruppe-P(O)-(OR¹⁹)₂ mit
- R¹¹, R¹², R¹³ =: unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe,
- R¹⁴ =: unabhängig voneinander Wasserstoff und/oder eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe
- R¹⁸ =: unabhängig voneinander Allyl- oder 2-Propenylgruppe, und
- R¹⁹ =: unabhängig voneinander Wasserstoff, Alkylgruppe, bevorzugt mit 1 bis 30, insbesondere mit 1 bis 20 Kohlenstoffatomen, oder Polyetherrest
bevorzugt handelt es sich bei R¹⁰ um Wasserstoff, eine Methylgruppe, eine AcetylGruppe, eine Phosphorsäuregruppe oder eine Acetoacetat-Gruppe, insbesondere bevorzugt um Wasserstoff oder eine Phosphorsäuregruppe

Die Eugenol-basierten Polyether der allgemeinen Formel (I) weisen vorzugsweise mindestens ein Fragment des Index a auf, besonders bevorzugt mindestens zwei unterschiedliche Fragmente des Index a auf.

Als Starter für die übergangsmetallkatalysierte und DMC-katalysierte Alkoxylierungsreaktion wird bevorzugt Eugenol eingesetzt, welches zu Produkten der Formel (I) mit R¹⁸ = Allylgruppe führen kann.

Als Starter für die alkalisch-katalysierte Alkoxylierungsreaktion werden bevorzugt Eugenol und Isoeugenol eingesetzt, welches zu Produkten der Formel (I) mit R¹⁸ = 2-Propenylgruppe führen kann.

Bei Eugenol (CAS-Nummer 97-53-0) handelt es sich um ein Allyl-substituiertes Phenol, welches unter den chemischen Bezeichnungen 4-Allyl-2-methoxyphenol, 4-Prop-2-enyl-2-methoxyphenol, 4-Allylbrenzcatechin-2-methylether oder auch 5-Allylguajacol bekannt ist. Es handelt sich um einen natürlichen Rohstoff, welcher ein Hauptbestandteil von Gewürznelkenöl und Pimentöl ist. Eugenol kann durch wässrige alkalische Behandlung (Ausschütteln) von Nelkenöl gewonnen werden. Dieser Ursprung des Rohstoffs Eugenol und der daraus resultierende Verzicht auf petrochemisch hergestellte Rohstoffe stellt unter ökologischen Gesichtspunkten einen wesentlichen Vorteil dar, insbesondere wenn man des Weiteren berücksichtigt, dass Eugenol nicht in Konkurrenz zu einer Nutzung als Nahrungsmittel steht.

Bei Isoeugenol (CAS-Nummer 97-54-1) handelt es sich um ein Konstitutionsisomer des Eugenols, bei dem die Allylgruppe in eine 2-Propenylgruppe umgelagert ist. Isoeugenol wird meist durch Isomerisierung von Eugenol hergestellt. Daher werden Verbindungen der Formel (I) bevorzugt aus Eugenol hergestellt, da es aus ökonomischen und ökologischen Gründen bevorzugt ist, auf den zusätzlichen Verfahrensschritt der Isomerisierung zu verzichten.

Als Alkylenoxide können generell alle dem Fachmann bekannten Alkylenoxide, rein oder in beliebigen Mischungen, eingesetzt werden. Einsetzbare Alkylenoxidverbindungen, die zu den in Formel (I) angegebenen Fragmenten mit dem Index a führen, sind z.B. Ethylenoxid, 1,2-Epoxypropan (Propylenoxid), 1,2-Epoxy-2-methylpropan (Isobutylenoxid), Epichlorhydrin, 2,3-Epoxy-1-propanol, 1,2-Epoxybutan (Butylenoxid), 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl)-1,2-epoxypropan, 3-(Perfluorohexyl)-1,2-epoxypropan, 4-(2,3-Epoxypropyl)morpholin, 1-(Oxiran-2-ylmethyl)pyrrolidin-2-on. Bevorzugt eingesetzt werden Ethylenoxid, Propylenoxid, Butylenoxid und Styroloxid. Besonders bevorzugt werden Ethylenoxid und Propylenoxid eingesetzt. In einer ganz besonders bevorzugten Ausführungsform werden Ethylenoxid und Propylenoxid in einem molaren Verhältnis von 1 : 3 bis 3 : 1, bevorzugt von 1 : 2 bis 2 : 1, insbesondere bevorzugt 1 : 1,5 bis 1 : 1 eingesetzt.

Als Glycidylether, welche zu den in Formel (I) angegebenen Fragmenten mit dem Index b führen, können generell alle dem Fachmann bekannten Glycidylether, rein oder in beliebigen Mischungen, eingesetzt werden.
Bevorzugt können Methyl-, Ethyl-, Propyl-, Butyl-, iso-Butyl-, tert-Butyl-, 2-Pentyl-, 3-Pentyl-, 2-Methylbutyl-, 3-Methylbutyl-, 2-Methyl-2-butyl-, 3-Methyl-2-butyl-, 2,2-Dimethylpropyl-, Hexyl-, Heptyl-, Octyl-, 2-Ethylhexyl-, 2-Propylheptyl-, 2-Butyloctanyl-, 2-Methylundecyl-, 2-Propylnonyl-, 2-Ethyldecyl-, 2-Pentylheptyl-, 2-Hexyldecyl-, 2-Butyltetradecyl-, 2-Dodecylhexadecyl-, 2-Tetradecyloctadecyl-, 3,5,5-Trimethylhexyl-, Isononanyl-, Isotridecyl-, Isomyristyl-, Isostearyl-, 2-Octyldodecyl-Triphenylmethyl-, C(O)-(CH₂)₅-C-(CH₃)₃- (Rest der Neodecansäure), C₁₂/C₁₄-Alkyl-, Phenyl-, Kresyl-, tert-Butylphenyl- oder Benzylglycidylether eingesetzt werden, sowie auch 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan. Besonders bevorzugt können 2-Ethylhexyl-, Neodecansäure-, C₁₂/C₁₄-Alkyl-, Kresyl-, tert-Butylphenylglycidylether, ganz besonders bevorzugt eine tert-Butylphenyl oder Kresylglycidylether eingesetzt werden.

Als Glycidylether können auch polyfunktionelle Glycidylether wie 1,4-Butandioldiglycidylether, 1,6-Hexandioldiglycidylether, Cyclohexandimethanoldiglycidylether, Neopentylglykoldiglycidylether, Polyethylenglykoldiglycidylether, Polypropylenglykoldiglycidylether, Polyglycerin-3-Glycidether, Glycerintriglycidether, Trimethylolpropantriglycidylether oder Pentraerythrittetraglycidylether eingesetzt werden, wodurch auch verzweigte Strukturelemente in das finale Alkoxylierungsprodukt der Formel (I) eingebracht werden können.

Um die in Formel (I) angegebenen Fragmente mit dem Index c in den Polyether einzuführen, kann eine Copolymerisation mit CO₂ durchgeführt werden.

Als cyclische Anhydride, welche zu den in Formel (I) angegebenen Fragmenten mit dem Index d führen, können generell alle dem Fachmann bekannten cyclischen Anhydride, rein oder in beliebigen Mischungen, eingesetzt werden. Als gesättigte, ungesättigte oder aromatische cyclische Dicarbonsäureanhydride, können bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid sowie polyfunktionelle Säureanhydride wie Pyromellit-Dianhydrid, Benzophenon-3,3',4,4'-tetracarbonsäure-Dianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol eingesetzt werden.
Besonders bevorzugt werden Bernsteinsäureanhydrid, Maleinsäureanhydrid, Phthalsäureanhydrid, und Hexahydrophthalsäureanhydrid eingesetzt, insbesondere Maleinsäureanhydrid und Phthalsäureanhydrid.

Als Lactone, welche zu den in Formel (I) angegebenen Fragmenten mit dem Index f führen, können generell alle dem Fachmann bekannten Lactone, rein oder in beliebigen Mischungen, eingesetzt werden.
Bevorzugt können Valerolactone oder Caprolactone eingesetzt werden, die beide unsubstituiert oder mit Alkylgruppen, bevorzugt Methylgruppen, substituiert sein können. Vorzugsweise können ε-Caprolacton oder δ-Valerolacton eingesetzt werden, insbesondere ε-Caprolacton.

Die Alkoxylierung von OH-funktionellen Startverbindungen kann sowohl unter Basen-, Säuren- oder Übergangsmetall-Katalyse erfolgen. Wie eingangs erwähnt wird die Alkoxylierung von Eugenol bevorzugt in Anwesenheit von Doppelmetallcyanid-(DMC)-Katalysatoren durchgeführt, sofern eine hydrosilylierende Folgeumsetzung zum Polyethersiloxan angestrebt wird.

Die Herstellung und Verwendung von DMC-Katalysatoren für Alkoxylierungsreaktionen ist seit den 1960er Jahren bekannt und werden zum Beispiel in US 3,427,256, US 3,427,334, US 3,427,335, US 3,278,457, US 3,278,458 oder US 3,278,459 dargestellt. Noch wirksamere DMC-Katalysatoren, im speziellen Zink-Cobalt-Hexacyanokomplexe wurden in der Folgezeit entwickelt, z.B. in US 5,470,813 und US 5,482,908 sowie EP 1276563 B1.

Als Doppelmetallcyanidkatalysatoren (DMC-Katalysatoren) werden vorzugsweise die in EP 1276563 B1 beschriebenen, insbesondere die dort als bevorzugt bzw. besonders bevorzugt beschriebenen DMC-Katalysatoren eingesetzt.
Die terminalen Hydroxygruppen der Eugenol-basierten Polyether können frei bleiben oder können teilweise oder komplett modifiziert werden, um die optimale Kompatibilität in der späteren Anwendungsmatrix einstellen zu können.
Als Modifikation sind Umesterungen, Veresterungen oder Veretherungen ebenso denkbar wie weitere Kondensations- oder Additionsreaktionen mit z. B. Isocyanaten.

Veresterungsreaktionen können sowohl mit organischen als auch mit anorganischen Säuren oder deren entsprechenden Anhydriden durchgeführt werden. Bei der Verwendung von poly-OH-funktionellen Säuren wie beispielsweise Phosphorsäure kann die Veresterung je nach Reaktionsführung prinzipiell an jeder freien OH-Gruppe erfolgen, was somit zu einer Verknüpfung von zwei oder drei erfindungsgemäßen Eugenol-basierten Polyethern über eine Phosphorsäuregruppe und somit zur Ausbildung eines entsprechenden Di- oder Triesters führen kann. Vorzugsweise wird die Reaktionsführung im konkreten Fall so gewählt, dass hauptsächlich ein mono-Phosphorsäureester der erfindungsgemäßen Eugenol-basierten Polyethern gebildet wird.

Die chemischen Modifizierungen der freien Hydroxygruppen der Eugenol-basierten Polyether können sowohl vor als auch nach der Hydrosilylierungsreaktion mit dem Si-H-funktionellen Polysiloxan durchgeführt werden.

Die Polydispersität (M_{w}/Mₙ) der Eugenol-basierten Polyether der Formel (I), bestimmt mittels GPC, beträgt vorzugsweise < 2,5, bevorzugt <2,0 und besonders bevorzugt von >1,05 bis <1,5.

Neben den Eugenol-Polyethern der Formel (I) können auch Polyethersiloxane der allgemeinen Formel (II) als Netzmittel eingesetzt werden.

Polyethersiloxane der allgemeinen Formel (II) erhält man vorzugsweise über eine edelmetallkatalysierte Hydrosilylierung von Eugenol-Polyethern der Formel (I) mit SiH-funktionellen Siloxanen, wobei eine SiC-Verknüpfung des Polyethers mit dem Siloxan erfolgt.

SiH-funktionelle Siloxane können vorzugsweise durch die Durchführung des aus dem Stand der Technik bekannten Verfahrens der Äquilibrierung, bevorzugt an sulfonsaurem Harz bereitgestellt werden. Die Äquilibrierung der verzweigten oder linearen, ggf. hydrosilylierten, Poly(organo)siloxane mit end- und/oder seitenständigen SiH-Funktionen wird im Stand der Technik, z. B. in den Schriften EP 1 439 200 A1, DE 10 2007 055 485 A1 und DE 10 2008 041 601 beschrieben. Diese Schriften werden hiermit als Referenz eingeführt und gelten als Teil der Offenbarung der vorliegenden Erfindung.

Die Herstellung der bevorzugt eingesetzten Silikonpolyetherblock-Copolymeren kann nach einem aus dem Stand der Technik bekannten Verfahren erfolgen, bei dem verzweigte oder lineare Polyorganosiloxane mit endständigen und/oder seitenständigen SiH-Funktionen, mit einem ungesättigten Polyether oder einem Polyethergemisch aus mindestens zwei ungesättigten Polyethern umgesetzt werden. Die Umsetzung wird vorzugsweise als edelmetallkatalysierte Hydrosilylierung, wie z. B. in EP 1 520 870 beschrieben, durchgeführt. Die Schrift EP 1 520 870 wird hiermit als Referenz eingeführt ebenso wie die bisher noch unveröffentlichte Anmeldung DE 102014217790.1. Als Edelmetallkatalysator wird vorzugsweise ein Platin aufweisender Katalysator eingesetzt.

Bei der Herstellung der bevorzugt als Netzmittel einsetzbaren Polyethersiloxane kann es vorteilhaft sein neben den terminal ungesättigten Eugenol-Polyethern weitere von diesen verschiedene lineare und/oder verzweigte, ungesättigte Polyetherverbindungen ebenso wie auch weitere terminal ungesättigte organische Verbindungen mit umzusetzen. Dies kann insbesondere vorteilhaft sein, um die Verträglichkeit der Eugenol-Polyether enthaltenden Polysiloxane mit der jeweiligen Anwendungsmatrix anpassen zu können.

Bei derartigen Polyethern handelt es sich vorteilhaft um Allylpolyether, die nach beliebigen Verfahren, die dem Stand der Technik zu entnehmen sind, hergestellt werden können.

Bei derartigen terminal ungesättigten organischen Verbindungen handelt es sich bevorzugt um Alken- oder Alkin-Verbindungen, die noch weitere Substituenten tragen können. Es können zum Beispiel Allylglycidether, Glycerinmonoallylether, Allylanisol, Allylphenol, Eugenol, Hexenol, Hexadecen sowie Undecylensäuremethylester eingesetzt werden, insbesondere bevorzugt Hexadecen, Eugenol und Glycerinmonoallylether.
Vorteilhaft einsetzbare Polyethersiloxane können ausschließlich Eugenol-basierte Polyether oder aber beliebige Mischungen dieser Eugenol-basierten Polyether mit terminal ungesättigten Verbindungen enthalten. Der molare Anteil der eingesetzten ungesättigten Eugenol-basierten Polyether zu den ungesättigten Verbindungen beträgt vorzugsweise von 0,001 bis 100 mol-%, bevorzugt von 10 bis 100 mol-% und besonders bevorzugt 20 bis 80-mol-% bezogen auf die Summe aus Eugenol-basiertem Polyether und ungesättigten Verbindungen.

Die erfindungsgemäßen Polysiloxanverbindungen der Formel (II)

M_{g} M'ₕ M"ₙ Dᵢ D'ⱼ D"ₘ Tₖ Qₗ Formel (II)

zeichnen sich dadurch aus, dass
- M: = [R¹⁵₃SiO_{1/2}]
- M': = [R¹⁶ R¹⁵₂SiO_{1/2}]
- M": = [R¹⁷ R¹⁵₂Si_{1/2}]
- D: = [R¹⁵₂SiO_{2/2}]
- D': = [R¹⁶ R¹⁵SiO_{2/2}]
- D": = [R¹⁷ R¹⁵SiO_{2/2}]
- T: = [R¹⁵SiO_{3/2}]
- Q: = [SiO_{4/2}]

- g: = 0 - 20, bevorzugt 0 - 10, insbesondere bevorzugt 2,
- h: = 0 - 20, bevorzugt 0 - 10, insbesondere bevorzugt 0,
- i: = 0 - 1000, bevorzugt 0 - 500, insbesondere bevorzugt 0 - 200,
- j: = 0 - 20, bevorzugt 1 - 15, insbesondere bevorzugt 1 - 10,
- k: = 0 - 20, bevorzugt 0 - 10, insbesondere bevorzugt 0,
- l: = 0 - 20, bevorzugt 0 - 10, insbesondere bevorzugt 0,
- m: = 0 - 20, bevorzugt 1 - 15, insbesondere bevorzugt 0,
- n: = 0 - 20, bevorzugt 0 - 10, insbesondere bevorzugt 0,
mit der Maßgabe, dass die Summe aus g + h + i + j + k + l + m größer gleich 3, sowie die Summe aus h + j ≥ 1 sein muss
und
- R¹⁵ =: unabhängig voneinander gleiche oder verschiedene Kohlenwasserstoffreste mit 1 - 16 Kohlenstoffatomen oder H, bevorzugt Methyl, Ethyl oder Phenyl, insbesondere bevorzugt Methyl,
- R¹⁶=: unabhängig voneinander gleiche oder verschiedene Polyetherreste, mit der Maßgabe, dass mindestens 10 % der Reste Eugenol-basierte Polyetherreste sind, bevorzugt entsprechen die Eugenol- basierten Polyetherreste der allgemeinen Formel (III) 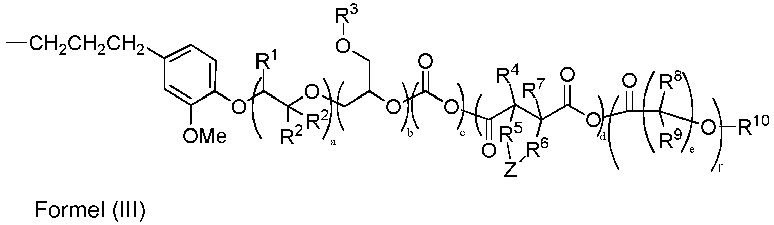
und bevorzugte nicht Eugenol-basierte Polyether entsprechen Resten der allgemeinen Formel (IV), 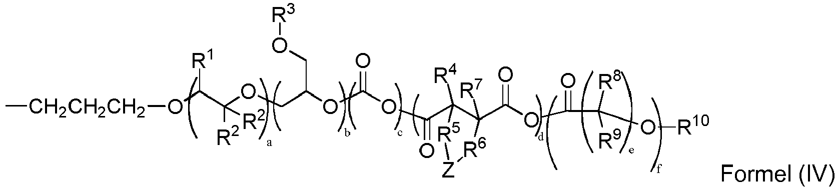 mit den Indices a-f und den Resten R¹-R¹⁰ wie zuvor definiert.
- R¹⁷=: unabhängig voneinander gleiche oder verschiedene Kohlenwasserstoffreste mit 1 - 16 Kohlenstoffatomen die auch Heteroatome enthalten können und weiter substituiert sein können, bevorzugt handelt es sich um SiC-verknüpfte Reste resultierend aus Allylglycidether, Glycerinmonoallylether, Allylanisol, Eugenol, Hexenol, Hexadecen und Undecylensäuremethylester, insbesondere bevorzugt Hexadecen, Eugenol und Glycerinmonoallylether.

Verbindungen der allgemeinen Formel (II), die neben Eugenol-basierten Polyethern der Formel (III) auch weitere nicht Eugenol-basierte Polyether der Formel (IV) enthalten, werden vorteilhaft in solchen Systemen eingesetzt, die einer Verträglichkeitsanpassung bedürfen. Enthält das Polyethersiloxan ausschließlich Eugenol-basierte Polyetherstrukturen, kann eine ggf. nötige Anpassung der Verträglichkeit auch durch den intrinsischen Aufbau des Eugenol-basierten Polyethers erreicht werden.

Die erfindungsgemäßen Polysiloxanverbindungen sind vorzugsweise durch das in DE 102014217790.1 beschriebene Verfahren erhältlich.

Wie bereits erwähnt ist die Verwendung der Eugenol-basierten Polyether und/oder Polyether-Siloxane erfindungsgemäß als Substratnetzmittel vorgesehen.
Als Substrate können prinzipiell alle dem Fachmann bekannten bedruckbaren und beschichtbaren Substrate mit den erfindungsgemäßen Produkten benetzt werden. Dabei sind sowohl flexible als auch rigide Substrate gemeint.

Die im Nachfolgenden genannten Substrate sollen der besseren Anschaulichkeit dienen und sind besonders bevorzugt, sollen jedoch nicht als Beschränkung auf eben diese Substrate aufgefasst werden.

Zu den geeigneten Substraten in diesen Anwendungen zählen verschiedenste Qualitäten, welche in diversen marktüblichen Endanwendungen zum Einsatz kommen.

In der Endanwendung Wellpappe sind diese ungestrichene Papiere, wie z.B. Kraftliner, Testliner und Schrenzpapier. Bei diesen Papierqualitäten wird die Bedruckbarkeit des Deckenpapieres wesentlich von Anteil und Qualität des bei der Herstellung verwendeten Altpapieres beeinflusst. Gerade Qualitäten mit hohem Anteil von unsortiertem Altpapier, wie bei Schrenz üblich, benötigen für eine saubere Bedruckung ein definiert wirkendes Substratnetzmittel, um die uneinheitlichen Oberflächenspannungen des Substrates sicher auszugleichen.
Ferner kommen bei Wellpappe insbesondere für höherwertige Verpackungen häufig gestrichen Papiere, wie z.B. gestrichene Kraftliner (beispielsweise der Qualität Kemiart Ultra der Fima MetsäBoard) und gestrichene Testliner (beispielsweise Topliner GD2, wie er von Herstellern wie Papyrus angeboten wird) zum Einsatz. Der Strich derartiger Papiersorten beeinflusst mit Saugfähigkeit und Oberflächenspannung zwei für die Bedruckung wesentliche Parameter. Durch die Herabsetzung der Saugfähigkeit und der Oberflächenspannung wird eine gleichmäßige Benetzung erschwert, was wiederum den Einsatz eines definiert wirkenden Substratnetzmittels erforderlich macht.
Weiterhin kommen bei Wellpappe für spezielle Anwendungen wie z.B. für die Verpackung von Teigen und sonstigen Backmassen oder die Verpackung von feuchtigkeitsempfindlichen Füllgütern wie Pulvern, mit Kunststoffen wie PE oder PET beschichtete Papierqualitäten zum Einsatz. Ferner kommen auch mit Barrierebeschichtungen versehene Papierqualitäten (wie z.B. die Fettbarrierebeschichtung X300 der Firma Michelman) bei der Herstellung von Sekundärverpackungen für fettige Füllgüter (wie z.B. Speisefette) zum Einsatz. Gerade bei derartigen Untergründen ist für eine gleichmäßige Benetzung des Untergrundes ein gut wirkendes und im Hinblick auf Anwendungen im Lebensmittelverpackungsbereich vorzugsweise migrationsarmes Substratnetzmittel erforderlich.

In der **Endanwendung Faltschachtel** und ähnlicher Kartonagenverpackungen kommen vornehmlich gestrichene Papier- und Kartonqualitäten zum Einsatz. Die Ansprüche an die Bedruckbarkeit und die eingesetzten Substratnetzmittel sind analog zu den schon bei der Endanwendung Wellpappe beschriebenen.

In der **Endanwendung Beutel und Tüten** kommen meist Kraft- und Natronpapiere mit Gramaturen unter 100 g/m² zum Einsatz. Diese sind in der Regel nicht oder nur leicht gestrichen und durch Kalandrieren verdichtet. Die Bedruckungscharakteristik ähnelt der von gestrichenen Papieren für die Wellpappherstellung. Durch die hohen regulatorischen Anforderungen an die Farbechtheit von Beutelverpackungen wie Bäckerbeuteln und Metzgereibeutel (gefordert wird eine Echtheit gemäß DIN EN 646 Langzeitkontakt), sind die Anforderungen hinsichtlich definierter Wirksamkeit und möglichst niedrigem Migrationspotential bei Farben und Lacken für diese Verpackungen besonders hoch. Dies macht den Einsatz von diesbezüglich optimierten Substratnetzmitteln notwendig.

In der **Endanwendung Sackverpackungen** kommen verschiedene ungestrichene und gestrichene Papiere als Deckenpapiere zum Einsatz. Die Säcke, die in der Branche auch als Klotzbodensäcke bezeichnet werden, haben je nach Beschaffenheit und spezifischem Gewicht der Füllgüter einen mehrlagigen Aufbau aus verschiedenen Papier- und/oder Kunststofflagen. Je nach verpacktem Füllgut variieren sowohl die Deckenpapiere, als auch die Anforderungen an die zur Bedruckung verwendeten Druckfarben und Drucklacke. Dabei werden speziell bei Füllgütern wie Trockenfutter für Tiere oder Saatgut wieder hohe Anforderungen an die Migrationsarmut der eingesetzten Inhaltsstoffe gestellt. Ferner stellen die hohen Ansprüche hinsichtlich Abriebbeständigkeit, Blockfestigkeit und definierter Antirutscheigenschaft der Oberfläche eine große Herausforderung für die Performance der Substratnetzmittel dar, da diese Eigenschaften eng mit der Gleichmäßigkeit des aufgebrachten Farb- bzw. Lackfilmes zusammen hängen.
In der **Endanwendung Zeitungen** kommen verschiedene meist ungestrichene und aber auch gestrichene Papiere als Deckenpapiere zum Einsatz. Bei der Bedruckung kommen dann Netzmittel zum Einsatz, wenn Verfahren wie Flexodruck, Tiefdruck, Siebdruck oder digitale Druckverfahren wie InkJet genutzt werden. Die Herausforderung für die Performance von Substratnetzmitteln in dieser Endanwendung stellt zum einen die Geschwindigkeit der Substratbenetzung dar (dies ist vor allem bei sehr schnell laufenden Druckmaschinen die Geschwindigkeiten von bis zu 1000 m/Minute erreichen, ein qualitätsbestimmender Faktor), zum anderen die exakte Steuerung der Substratbenetzung. Dies ist speziell bei ungestrichenen oder nur leicht gestrichenen Papierqualitäten von entscheidender Bedeutung, da eine zu starke Benetzung zu einem unkontrollierten Verlaufen der Druckfarbe bzw. des Drucklackes und damit zu einem unsauberen Druckbild führen kann. Bei gestrichenen und hochgestrichenen Papierqualitäten besteht wiederum die Gefahr von Druckstörungen durch nicht ausreichende Substratbenetzung. Ein weiterer Aspekt ist die Recyclingfähigkeit der bedruckten Papiere. Hier tragen hochmolekulare Substratnetzmittel mit ihren positiven Eigenschaften hinsichtlich des Migrationspotentials positiv zu einer Qualitätsverbesserung bei und erweitern die Anwendungsmöglichkeiten der mit dem Recyclingmaterial hergestellten Substratqualitäten.

In den **Endanwendungen Formulardruck und Linierfarben** kommen verschiedene meist Papierqualitäten mit leichtem Strich zum Einsatz. Jedoch finden bei Produkten aus dem Niedrigpreissegment auch ungestrichene Papiere Verwendung und für hochwertige Formulare und Schreibwaren werden auch gestrichene und kalandrierte Papiere als Substrat eingesetzt. Die Bedruckung erfolgt häufig im Flexodruck, seltener im Tiefdruck oder Offsetdruck. Siebdruck wird meist nur für spezielle Effekte wie z.B. das Drucken von erhabenen Strukturen wie Braille (Blindenschrift) oder Sicherheitsmerkmalen eingesetzt. Digitale Druckverfahren wie InkJet kommen hierbei entweder für sehr kleine Auflagen oder in Kombination mit einem der konventionellen Druckverfahren für die Individualisierung der Drucke zur Anwendung. Ähnlich bei der Endanwendung Zeitung ist die zentrale Anforderung an das Substratnetzmittel die exakte Steuerung der Substratbenetzung sowie im Flexodruck auch der Oberflächen der verwendeten Druckformen, um ein störungsfreies exaktes Druckbild zu erzielen. Ebenso verhält es sich mit der Recyclingfähigkeit der bedruckten Papiere. Hier tragen hochmolekulare Substratnetzmittel mit ihren positiven Eigenschaften hinsichtlich des Migrationspotentials positiv zu einer Qualitätsverbesserung bei und erweitern die Anwendungsmöglichkeiten der mit dem Recyclingmaterial hergestellten Substratqualitäten.

In der **Endanwendungen Geschenkpapier** kommt eine große Bandbreite verschiedenster Papier- und teils auch Folienqualitäten zum Einsatz. Das Sortiment reicht von weitgehend ungestrichenen nur leicht kalandrierten oder strukturierten Qualitäten als weiße oder braune Ware, über verschiedene gestrichene und kalandrierte Qualitäten bis hin zu hochwertigen metallisierten Substraten und Vlies. Bei den Folien werden meist PET und OPP bedruckt, wobei auch andere Folientypen möglich sind. Die Herausforderung für das Substratnetzmittel liegt bei dieser Anwendung vor allem in der gleichmäßigen und präzisen Benetzung der vielen unterschiedlichen Substratqualitäten, da typischerweise von den Produzenten aus Gründen von Logistik und Lagerhaltung möglichst nur mit einer Farbserie produziert wird. Ferner sind bei dieser sehr vom Design getriebenen Endanwendung die Ansprüche an die Optik und damit an ein exaktes fehlerfreies Druckbild sehr hoch. Weiterhin stellen die meist sehr hohen Druckgeschwindigkeiten (meist zwischen 200 und 500 Metern pro Minute) eine hohe Anforderung für die Substratbenetzung dar. Als Druckverfahren kommen traditionell vor allem Tiefdruck und Flexodruck zur Anwendung. Siebdruck wird eher selten und wenn, dann meist nur für spezielle Effekte wie erhabene Strukturen oder das Verdrucken sehr großer Effektpigmente (wie zum Beispiel Perlmuttpigment, Glitter oder Flitter mit Partikelgrößen von 60 µm und mehr) genutzt. Digitale Druckverfahren wie InkJet kommen hierbei meist, entweder für sehr kleine Auflagen oder für die Erstellung von Musterkollektionen zur Anwendung. Bei Qualitäten, welche im lebensmittelnahen Bereich eingesetzt werden, ist ferner ein niedriges Migrationspotential der verwendeten Inhaltsstoffe ein wichtiger Parameter. Hier stellen sich hochmolekulare Substratnetzmittel mit ihren positiven Eigenschaften hinsichtlich des Migrationspotentials positiv dar.

In der **Endanwendungen Dekorpapier** (Papiere mit natürlichen oder artifiziellen Dekoren für Gebrauchsgegenstände wie Möbel, Laminatfußböden, Küchenarbeitsplatten etc.) kommen vornehmlich saugfähige Papiere mit leichtem bis mittlerem Strich zum Einsatz. Partiell sind diese massegefärbt. Ferner werden auch sogenannte Vorimprägnate bedruckt, bei denen das Dekorpapier vorab mit einen Melaminharzlösung getränkt wird. Die Bedruckung erfolgt vornehmlich im Tiefdruck, meist bei Maschinengeschwindigkeiten von 200 bis 600 Metern pro Minute. Insofern greifen hier die gleichen Anforderungen, wie schon in den anderen Anwendungen mit hohen Druckgeschwindigkeiten beschrieben. Der Flexodruck spielt bei der Bedruckung von Dekorpapieren eine geringere Rolle und kommt vornehmlich bei der Herstellung von einfacheren Qualitäten wie z.B. Dekor für Schrankrückwände zum Einsatz. Gleichwohl greifen auch hier die Anforderungen hinsichtlich Benetzung von Substrat und Druckform analog zu den schon beschriebenen Endanwendungen. Digitale Druckverfahren wie InkJet kommen hierbei meist entweder für sehr kleine Auflagen oder für die Erstellung von Musterkollektionen zur Anwendung. Dabei nimmt die Bedeutung der Kleinauflagen durch den Trend zu individuellen Designs und die Möglichkeit einer auftragsbezogenen Produktion stetig zu.
Gerade die genannten Substratqualitäten mit hoher Saugfähigkeit auf der einen Seite und Melaminharz-Oberfläche auf der anderen Seite, benötigen für eine saubere Bedruckung ein definiert wirkendes Substratnetzmittel, um zum einen ein unkontrolliertes Wegschlagen in den Bedruckstoff zu vermeiden und zum anderen die uneinheitlichen Oberflächenspannungen des Substrates sicher auszugleichen. Ferner ist es wichtig, dass das Substratnetzmittel in den nachfolgenden Prozessschritten nicht zu Störungen speziell bei der Zwischenlagenhaftung (Untergrund, Dekorpapier, Deckschichten) führt.

In der **Endanwendungen Tapete** ist eine große Bandbreite verschiedenster Substratqualitäten im Einsatz. Das Sortiment reicht von gestrichenen Papieren, über PVC-beschichtete Papiere (in der Branche auch Vinyl genannt) bis hin zu hochwertigen ungestrichenen und gestrichenen Vlies-Typen. Als Vlies bezeichnet man in der Tapetenbranche Papierqualitäten mit einem Kunststofffaseranteil (meist PE oder PP) von typischerweise 10 bis 20 %. Ebenso vielfältig sind die eingesetzten Druckverfahren. Typischerweise kombinieren die Hersteller verschiedene Druckverfahren miteinander, um in einer Produktionslinie alle designseitig gewünschten Effekte erzielen zu können. Meist werden Flexodruck oder Tiefdruck mit rotativem Siebdruck, Walzenauftragsverfahren und Streubeschichtung kombiniert. Bisweilen kommen für Individualisierungen und Kleinauflagen auch Digitale Druckverfahren wie InkJet oder tonerbasierter Druck zum Einsatz.
Die Herausforderung für das Substratnetzmittel liegt bei dieser Anwendung vor allem in der gleichmäßigen und präzisen Benetzung der vielen unterschiedlichen Substratqualitäten mit den verschiedenen eingesetzten Druckverfahren, da typischerweise von den Produzenten im konventionellen Druckbereich möglichst nur mit einer Farbserie produziert wird. Ferner sind bei dieser sehr vom Design getriebenen Endanwendung die Ansprüche an die Optik und damit an ein exaktes fehlerfreies Druckbild sehr hoch. Weiterhin stellen die sehr unterschiedlichen Druckgeschwindigkeiten (meist zwischen 40 und 300 Metern pro Minute) eine hohe Anforderung für die Substratbenetzung dar. Des Weiteren stellen die vielfältigen, eingesetzten Effektfarben (Metalleffektpigmente, Perlmutteffektpigmente, Glitter, Flitter, Nachleuchtpigmente, leitfähige Pigmente, thermosensitive Pigmente etc.) hohe Anforderungen an die Substratnetzmittel, da für die Effekte zum einen eine störungsfreie Benetzung des Substrates und zum anderen eine optimale Orientierung der größtenteils plättchenförmigen Effektpigmente notwendig sind.

In der **Endanwendungen Hygienepapiere** (Servietten, Küchentücher, Toilettenpapier, Kosmetiktücher etc., wobei Feuchttücher, getränkte Kosmetikpads und ähnliche Produkte explizit eingeschlossen sind) kommen vornehmlich sehr saugfähige Papiere ohne oder mit leichter Kalandrierung zum Einsatz. Partiell kommen aber auch Vlies- oder Non-Woven-Qualitäten mit unterschiedlich hohen Kunststofffaseranteilen (in der Regel zwischen 5 und 100%) zum Einsatz. In den einzelnen Endanwendung werden eine oder mehrere (typischerweise zwei bis vier) Lagen Substrat verwendet. Hinsichtlich der Druckverfahren kommt hauptsächlich Flexodruck zur Anwendung. Die Maschinengeschwindigkeiten reichen dabei in der Regel von 150 Metern pro Minute bis hin zu 500 Metern pro Minute. Teilweise kommt aber auch ein sogenannter Prägedruck zum Einsatz, bei dem der Farbeindruck über das Aufbringen eines eingefärbten Klebers mittels spezieller Prägewalzen erfolgt. Dieses Verfahren kommt vermehrt bei der Herstellung von Toilettenpapieren zum Einsatz.

Gerade die genannten Substratqualitäten mit der hohen Saugfähigkeit benötigen für eine saubere Bedruckung ein definiert wirkendes Substratnetzmittel, um zum einen ein unkontrolliertes Wegschlagen in den Bedruckstoff zu vermeiden und zum anderen die uneinheitlichen Oberflächenspannungen des Substrates sicher auszugleichen. Ferner ist es wichtig, dass das Substratnetzmittel für eine gute Benetzung der Fasern sorgt, damit der aufgebrachte Farbfilm gut haftet und somit die Voraussetzungen für die Erreichung der für diese Endanwendungen geforderten Ausblutechtheiten nach DIN EN 646 geschaffen werden. Da die Endanwendungen vornehmlich im potentiell lebensmittelnahen oder kosmetischen Bereich liegen, sind die Anforderungen an das Substratnetzmittel bezüglich der Migrationsarmut natürlich entsprechend hoch.

In der **Endanwendung Etiketten** kommen verschiedene Papierqualitäten mit leichtem bis hohem Strich zum Einsatz. Teilweise kommen auch metallisierte Qualitäten zum Einsatz. Darüber hinaus kommen aber auch verschiedenste Folienqualitäten zum Einsatz. Jedoch finden bei Produkten aus dem Niedrigpreissegment auch ungestrichene, leicht kalandrierte Papiere Verwendung. Die Bedruckung erfolgt häufig im Flexodruck, im Tiefdruck oder Offsetdruck. Siebdruck wird meist nur für spezielle Effekte wie z.B. das Drucken von erhabenen Strukturen wie Braille (Blindenschrift) oder Sicherheitsmerkmalen eingesetzt. Digitale Druckverfahren wie InkJet kommen hierbei entweder für sehr kleine Auflagen oder in Kombination mit einem der konventionellen Druckverfahren für die Individualisierung der Drucke zur Anwendung. Ähnlich wie bei der Endanwendung Formulardruck ist die zentrale Anforderung an das Substratnetzmittel die exakte Steuerung der Substratbenetzung sowie im Flexodruck auch der Oberflächen der verwendeten Druckformen um ein störungsfreies exaktes Druckbild zu erzielen. Ebenso verhält es sich mit der Recyclingfähigkeit der bedruckten Papiere. Hier tragen hochmolekulare Substratnetzmittel mit ihren positiven Eigenschaften hinsichtlich des Migrationspotentials positiv zu einer Qualitätsverbesserung bei und erweitern die Anwendungsmöglichkeiten der mit dem Recyclingmaterial hergestellten Substratqualitäten.

In der **Endanwendung aseptische Getränkeverpackung** und ähnlicher Kartonagenverpackungen kommen vornehmlich gestrichene Papier und Kartonqualitäten zum Einsatz. Die Ansprüche an die Bedruckbarkeit und die eingesetzten Substratnetzmittel sind analog zu den schon bei der Endanwendung Wellpappe beschriebenen.
Die Bedruckungscharakteristik ähnelt der von gestrichenen Papieren für die Wellpappherstellung. Durch die hohen regulatorischen Anforderungen in dieser Endanwendung, sind die Anforderungen hinsichtlich definierter Wirksamkeit und möglichst niedrigem Migrationspotential bei Farben und Lacken für diese Verpackungen besonders hoch. Dies macht den Einsatz von diesbezüglich optimierten Substratnetzmitteln notwendig.

In der **Endanwendung Verpackungsfolien** kommen einen Vielzahl von Folienqualitäten zum Einsatz. Diese reichen von PE, PP, OPP, BOPP, PET, PEN (Polyethylennaphtalat z.B Teonex®), Polyester (z.B. Hostaphan® oder Melinex®), Cellulosehydratfolien (Cellophan®), PVC (Polyvinylchlorid) bis hin zu sogenannten "Biofolien" wie PLA (Polylacticacid = Polymilchsäure). Diese Aufzählung ist nur beispielhaft. Alle sonstigen potentiell verwendbaren Foliensubstrate sind explizit eingeschlossen. Dies gilt in gleicher Weise bei den im Folgenden erwähnten Folien mit verschiedenen Barriere- bzw. Funktional- oder Effektbeschichtungen. Teilweise werden diese Folien auch mit verschiedenen Barrierebeschichtungen (PVDC, EVOH, SiOx, AlOx, etc.), Funktionalbeschichtungen (z.B. Nanopartikeln zur Verbesserung von Kratzfestigkeit und anderen mechanischen Beständigkeiten, z.B. TEGO® Nanoresins) oder Metallisierung versehen eingesetzt. Die Bedruckung erfolgt meist im Flexodruck oder Tiefdruck. Siebdruck wird meist nur für spezielle Effekte wie z.B. das Drucken von erhabenen Strukturen wie Braille (Blindenschrift) oder Sicherheitsmerkmalen eingesetzt. Digitale Druckverfahren wie InkJet kommen hierbei entweder für sehr kleine Auflagen oder in Kombination mit einem der konventionellen Druckverfahren für die Individualisierung der Drucke zur Anwendung. Ein weiterer Einsatzbereich für InkJet ist hierbei der Eindruck von Strichcodes und Produktinformationen wie Haltbarkeitsdaten. In der Industrie wird dieser Bereich auch als Coding und Marking bezeichnet. Ähnlich wie bei anderen schon beschriebenen Endanwendungen mit nicht saugenden Substraten ist die zentrale Anforderung an das Substratnetzmittel die exakte Steuerung der Substratbenetzung sowie im Flexodruck auch der Oberflächen der verwendeten Druckformen, um ein störungsfreies exaktes Druckbild zu erzielen. Ebenso verhält es sich mit der Recyclingfähigkeit der bedruckten Folien. Hier tragen hochmolekulare Substratnetzmittel mit ihren positiven Eigenschaften hinsichtlich des Migrationspotentials positiv zu einer Qualitätsverbesserung bei und erweitern die Anwendungsmöglichkeiten der mit dem Recyclingmaterial hergestellten Substratqualitäten.

Es ist vorstellbar die Verwendung der Eugenol-basierten Polyether gemäß den Ansprüchen als Substratnetzmittel in Zusammensetzungen enthaltend
a) mindestens eine Verbindung der Formeln (I) oder (II)
b) optional ein oder mehrere Pigmente und Füllstoffe
c) mindestens ein Bindemittel
d) optional ein oder mehrere Wachse
e) optional mindestens ein Lösemittel
f) optional ein oder mehrere Filmbildehilfsmittel (Koaleszenzmittel)
g) optional ein oder mehrere Rheologieadditive
h) optional ein oder mehrere Entschäumer
i) optional ein oder mehrere Neutralisationsmittel
j) optional sonstige Komponenten (wie Verzögerer, Gleitadditive etc.)
Erfindungsgemäß bevorzugte Zusammensetzungen enthalten
a) mindestens eine Verbindung der Formeln (I) oder (II)
b) optional ein oder mehrere Pigmente und Füllstoffe
c) mindestens ein Bindemittel
d) optional ein oder mehrere Wachse
e) mindestens ein Lösemittel
f) optional ein oder mehrere Filmbildehilfsmittel (Koaleszenzmittel)
g) optional ein oder mehrere Rheologieadditive
h) optional ein oder mehrere Entschäumer
i) optional ein oder mehrere Neutralisationsmittel
j) optional sonstige Komponenten (wie Verzögerer, Gleitadditive etc.)
Erfindungsgemäß besonders bevorzugte Zusammensetzungen enthalten
a) mindestens eine Verbindung der Formeln (I) oder (II)
b) ein oder mehrere Pigmente und Füllstoffe, bevorzugt ausgewählt aus der Gruppe aus Pigment White 6 (Titandioxid sowohl in der Rutil- als auch in der Anatas-Variante), Pigment Black 7 (Ruß), Pigment Blue 15:3 bzw. Pigment Blue 15:4 (Phthalocyanin-Pigmente), Pigment Red 57:1 (verlacktes BONA-Pigment (BONA = beta-oxynaphthoic acid)), Pigment Yellow 12, Pigment Yellow 13, (Diarylidgelb- und Diarylidorange-Pigmente), Pigment Violet 23 (Dioxazine Pigment) und/oder Pigment Green 7 (Phthalocyanin-Pigment),
c) mindestens ein Bindemittel
d) optional ein oder mehrere Wachse
e) optional mindestens ein Lösemittel
f) optional ein oder mehrere Filmbildehilfsmittel (Koaleszenzmittel)
g) optional ein oder mehrere Rheologieadditive
h) optional ein oder mehrere Entschäumer
i) optional ein oder mehrere Neutralisationsmittel
j) optional sonstige Komponenten (wie Verzögerer, Gleitadditive etc.)
Erfindungsgemäß insbesondere bevorzugte Zusammensetzungen enthalten
a) mindestens eine Verbindung der Formeln (I) oder (II)
b) optional ein oder mehrere Pigmente und Füllstoffe
c) mindestens ein Bindemittel
d) optional ein oder mehrere Wachse
e) optional mindestens ein Lösemittel
f) optional ein oder mehrere Filmbildehilfsmittel (Koaleszenzmittel)
g) optional ein oder mehrere Rheologieadditive
h) ein oder mehrere Entschäumer
i) optional ein oder mehrere Neutralisationsmittel
j) optional sonstige Komponenten (wie Verzögerer, Gleitadditive etc.)
Erfindungsgemäß insbesondere bevorzugte Zusammensetzungen enthalten
a) mindestens eine Verbindung der Formeln (I) oder (II)
b) ein oder mehrere Pigmente und Füllstoffe, bevorzugt ausgewählt aus der Gruppe aus Pigment White 6 (Titandioxid sowohl in der Rutil- als auch in der Anatas-Variante), Pigment Black 7 (Ruß), Pigment Blue 15:3 bzw. Pigment Blue 15:4 (Phthalocyanin-Pigmente), Pigment Red 57:1 (verlacktes BONA-Pigment (BONA = beta-oxynaphthoic acid)), Pigment Yellow 12, Pigment Yellow 13, (Diarylidgelb- und Diarylidorange-Pigmente), Pigment Violet 23 (Dioxazine Pigment) und/oder Pigment Green 7 (Phthalocyanin-Pigment),
c) mindestens ein Bindemittel
d) optional ein oder mehrere Wachse
e) mindestens ein Lösemittel, bevorzugt mindestens ein Lösemittel ausgewählt aus Wasser, Ethanol, Isopropanol und/oder Ethylacetat,
f) optional ein oder mehrere Filmbildehilfsmittel (Koaleszenzmittel)
g) optional ein oder mehrere Rheologieadditive
h) ein oder mehrere Entschäumer
i) optional ein oder mehrere Neutralisationsmittel
j) optional sonstige Komponenten (wie Verzögerer, Gleitadditive etc.)
insbesondere geeignet zur Verwendung als Druckfarbe, Drucktinte oder Drucklack sowie sonstiger mittels analoger oder digitaler Beschichtungsverfahren aufgebrachter Farben, Lacke, Tinten, Farbpräparationen und Beschichtungen für die oben genannten Substrate und Anwendungsgebiete.

### Pigmente und Füllstoffe (Komponente b)):

Bei der folgenden Aufstellung werden zur Beschreibung der Pigmenttypen die international gebräuchlichen Color-Indices genutzt.

Hierzu zählen insbesondere organische Pigmente:
Monoazogelb- und Monoazoorange-Pigmente (wie z.B. Pigment Yellow 1, Pigment Yellow 74, Pigment Yellow 111 oder Pigment Orange 1), Diarylidgelb- und Diarylidorange-Pigmente (wie z.B. Pigment Yellow 12, Pigment Yellow 13, Pigment Yellow 14, Pigment Orange 16), Bisacetoacetarylid-Pigmente (wie z.B. Pigment Yellow 16, Pigment Yellow 155), Disazopyrazolon-Pigmente (wie z.B. Pigment Orange 13, Pigment Orange 34), β-Naphthol-Pigmente (wie z.B. Pigment Orange 5, Pigment Red 1), Naphthol-AS-Pigmente (wie z.B. Pigment Red 2, Pigment Red 170, Pigment Red 184), verlackte β-Naphthol-Pigmente (wie z.B. Pigment Red 49:2, Pigment Red 53:1), verlackte BONA-Pigmente (BONA = beta-oxynaphthoic acid) (wie z.B. Pigment Red 48:3, Pigment Red 57:1), verlackte Naphthol-AS-Pigmente (wie z.B. Pigment Red 151, Pigment Red 247), verlackte Naphtalensulfonsäure-Pigmente (wie z.B. Pigment Yellow 104, Pigment Red 60:1), Benzimidazol-Pigmente (wie z.B. Pigment Yellow 151, Pigment Yellow 181, Pigment Red 208, Pigment Violett 32), Diazokondensations-Pigmente (wie z.B. Pigment Yellow 93, Pigment Red 166, Pigment Red 242), Metallkomplex-Pigmente (wie z.B. Pigment Yellow 150, Pigment Red 257), Isoindolinon- und Isoindolin-Pigmente (wie z.B. Pigment Yellow 110, Pigment Yellow 185), Phthalocyanin-Pigmente (wie z.B. Pigment Blue 15:3, Pigment Blue 15:4, Pigment Blue 16, Pigment Green 7), Quinacridon-Pigmente (wie z.B. Pigment Violett 19, Pigment Red 122, Pigment Red 202, Pigment Red 282), Perylene und Perinone Pigmente (wie z.B. Pigment Red 123, Pigment Red 178, Pigment Black 31, Pigment Black 32, Pigment Orange 43, Pigment Red 194), Thioindigo Pigments (wie z.B. Pigment Red 88, Pigment Red 181), Aminoanthraquinon Pigmente (wie z.B. Pigment Yellow 147, Pigment 89, Pigment Red 177, Pigment Blue 60, Pigment Violet 31), Dioxazine Pigmente (wie z.B. Pigment Violet 23, Pigment Violet 37), Triarylcarbonium Pigmente (wie z.B. Pigment Blue 56, Pigment Blue 61, Pigment Violet 3, Pigment Violet 27, Pigment Blue 62, Pigment Red 81:1, Pigment Red 81:3), Quinophthalone Pigmente (wie z.B. Pigment Yellow 138), Diketopyrrolo-Pyrrole (DPP) Pigments (wie z.B. Pigment Red 254, Pigment Red 255), Aluminium verlackte Pigmente (wie z.B. Pigment Red 172, Pigment Blue 24:1, Pigment Blue 63), sonstige organische Pigmente (wie z.B. Pigment Yellow 148, Pigment Yellow 182, Pigment Orange 64, Pigment Red 252, Pigment Brown 22, Pigment Black 1)
Weiterhin zählen hierzu insbesondere anorganische Pigmente:
   Eisenoxidpigmente (wie z.B. Pigment Yellow 42, Pigment Red 101, Pigment Black 11), Chromoxid-Pigmente (wie z.B. Pigment Grün 17), Ultramarinpigmente (wie z.B. Pigment Blue 29, Pigment Violett 15, Pigment Red 259); komplexe anorganische Buntpigmente (Rutil-Pigmente: wie z.B. Pigment Brown 24, Pigment Yellow 53, Pigment Yellow 164 oder Spinell-Pigmente: wie z.B. Pigment Blue 28, Pigment Blue 36, Pigment Green 50, Pigment Yellow 119, Pigment Brown 29, Pigment Black 22, Pigment Black 27, Pigment Black 28); Cadmium-Pigmente (wie z.B. Pigment Yellow 35, Pigment Yellow 37, Pigment Orange 20, Pigment Red 108); Bismutvanadat-Pigmente (wie z.B. Pigment Yellow 184); Cersulfid-Pigmente (wie z.B. Pigment Orange 75, Pigment Red 265), Chromat Pigmente (wie z.B. Pigment Yellow 34, Weißpigmente: (wie z.B. Pigment White 4 (Zinkweiß), Pigment White 5 (Litopone aus Bariumsulfat und Zinksulfid), Pigment White 6 (Titandioxid sowohl in der Rutilals auch in der Anatas-Variante), Pigment White 7 (Zinksulfid), Pigment White 14 (Calciumcarbonat), Pigment White 21 und 22 (Bleiweiß));
   Schwarzpigmente: (wie z.B. Pigment Black 1 (Anilinschwarz), Pigment Black 7 (Ruß));
Darüber hinaus zählen hierzu insbesondere Effektpigmente:
   Perlmuttpigmente (wie z.B. die Iriodin®-Pigmente der Firma Merck), Glitter (wie z.B. die Glitter-Typen der Firma RJA Plastics GmbH), Flitter (wie z.B. die Alu-Typen der Firma RJA Plastics GmbH), lumineszierende Pigmente (wie z.B. die Lumilux-Typen der Firma Honeywell), magnetische Pigmente (wie z.B. die Eisenoxid-Typen der Firma Cathay Industries), Korrosionsschutzpigmente (wie z.B. Zinkphosphate, Aluminiumphosphate etc.), Metalleffekt-Pigmente (wie z.B. Pigmente auf Basis von Aluminium, Kupfer, Goldbronzen (Kupfer-Zink-Legierungen), Zink und anderer Metalle, wie sie z.B. von der Carl Schlenk AG oder der Firma Silberline Manufacturing Co., INC. Hergestellt werden).
   Besonders bevorzugt werden in vielen Endanwendungen die folgenden Pigmente eingesetzt:
      Pigment White 6 (Titandioxid sowohl in der Rutil- als auch in der Anatas-Variante), Pigment Black 7 (Ruß), Pigment Blue 15:3 bzw. Pigment Blue 15:4 (Phthalocyanin-Pigmente), Pigment Red 57:1 (verlacktes BONA-Pigment (BONA = **b**eta-**o**xy**n**aphthoic **a**cid)), Pigment Yellow 12 bzw. Pigment Yellow 13 (Diarylidgelb- und Diarylidorange-Pigmente), Pigment Violet 23 (Dioxazine Pigment), Pigment Green 7 (Phthalocyanin-Pigment) Bevorzugte Füllstoffe sind z.B. Kreide (Calciumcarbonat), Magnesia (Magnesiumcarbonat), Bariumsulfat etc.). Vom Begriff der Füllstoffe auch umfasst sind organische und anorganische Mattierungsmittel (wie z.B. die Acematt®- und Aerosil®-Produkte der Evonik Industries AG) sowie alle weiteren für die in dieser Schrift beschriebenen Anwendungen einsetzbaren Füllstoffe und Mattierungsmittel.

### Bindemittel (Komponente c)):

Bevorzugt einsetzbar sind Acrylatbindemittel (wie z.B. unter dem Markennamen Induprint® von der Indulor AG oder unter dem Markennamen Degalan® von Evonik Industries AG hergestellt), Styrolacrylatbindemittel (wie z.B unter dem Markennamen Joncryl® von der BASF SE oder unter dem Markennamen Indurez® von der Indulor AG hergestellt), Polyesterbindemittel (wie z.B. unter den Markennamen AddBond® oder Dynapol® von Evonik Industries AG hergestellt), Polyolharze (wie z.B. unter dem Markennamen VariPlus® von Evonik Industries AG hergestellt), Maleinat- und Fumaratbindemittel (wie z.B. unter dem Markennamen Erkamar® von der Firma Robert Kraemer hergestellt), auf natürlichen Rohstoffen basierende Bindemittel (wie z.B. Bindemittel auf Basis von Zucker, Stärke, Cellulose, Casein, Sojaprotein sowie deren Derivate und andere auf natürlichen Rohstoffen basierende Typen), Polyvinylalkohol-Bindemittel (wie z.B. unter dem Markennamen Makrovil® von der Indulor AG hergestellt), sowie alle weiteren für die in dieser Schrift beschriebenen Anwendungen einsetzbaren Bindemittel. Hierbei können manche Bindemittel in Lieferform eingesetzt (z.B. Induprint SE 900) während andere erst nach Neutralisation (z.B. Indurez SR 10) oder anderen Aufbereitungsschritten (z.B. Casein) eingesetzt werden.

### Wachse und ähnlich wirkende Additive (Komponente d)):

Zu den bevorzugt einsetzbaren Wachsen zählen PE-Wachse, PP-Wachse, PTFE-Wachse, Fischer-Tropsch-Wachse, Amid-Wachse, Paraffin-Wachse, Carnauba-Wachse und sowie alle weiteren für die in dieser Schrift beschriebenen Anwendungen einsetzbaren Wachse und wachsartigen Substanzen.

### Lösemittel (Komponente e)):

Bevorzugt einsetzbare Lösungsmittel sind vorzugsweise Wasser oder organische Lösungsmittel (wie z.B. Ethanol, Isopropanol, Butanol, Methoxypropanol, Ethoxypropanol, Ethylacetat, Methyethylketon) allein oder in Kombination miteinander sowie alle weiteren für die in dieser Schrift beschriebenen Anwendungen einsetzbaren Lösemittel in beliebiger Kombination. Besonders bevorzugt werden Wasser, Ethanol, Isopropanol und Ethylacetat eingesetzt.

### Filmbildehilfsmittel (Koaleszenzmittel) (Komponente f)):

Bevorzugt einsetzbare Filmbildehilfsmittel sind z.B. Glykole wie Dowanol DPnB aber auch Alkohole wie Ethanol sowie alle weiteren für die in dieser Schrift beschriebenen Anwendungen einsetzbaren Filmbildehilfsmittel.

### Rheologieadditive (Komponente g)):

Bevorzugt einsetzbare Rheologieadditive sind organische Rheologieadditive (wie z.B. Acyrlatverdicker (wie unter der Bezeichnung Indunal® T 256 von der Indulor AG oder unter der Bezeichnung Rheovis® AS 1125 SA (früher Latekoll® D) von der BASF SE hergestellt) oder Polyurethanverdicker (wie sie z.B. unter dem Markennamen ViscoPlus® von der Evonik Industries AG oder Tafigel® Pur von der Münzing Chemie hergestellt werden)) sowie anorganische Rheologieadditive (wie z.B. unter dem Markennamen Aerosil® von der Evonik Industries AG oder Bentone® von der Firma Elementis hergestellt).

### Entschäumer (Komponente h)):

Bevorzugt einsetzbare Entschäumer sind z.B. entschäumend wirkende Additive auf organischer Basis (wie z.B. Produkte wie TEGO® Foamex 833 oder TEGO® Foamex 831 wie von Evonik Industries AG hergestellt) oder auf Silikonbasis (wie z.B. Produkte wie TEGO® Foamex N oder TEGO® Foamex 3062 wie von Evonik Industries AG hergestellt) sowie alle weiteren für die in dieser Schrift beschriebenen Anwendungen einsetzbaren entschäumend wirkende Substanzen.

### Neutralisationsmittel (Komponente i)):

Bevorzugt einsetzbare Neutralisationsmittel sind Amine (wie z.B. Ammoniak, DMEA, TEA, AMP etc.), anorganische Neutralisationsmittel (wie z.B. Natronlauge, Kalilauge etc.) sowie alle weiteren für die in dieser Schrift beschriebenen Anwendungen einsetzbaren Neutralisationsmittel.

### sonstige Komponenten (Komponente j)):

Hierzu zählen:
- Verzögerer, die zur Einstellung der Trocknungsgeschwindigkeit eingesetzt werden (wie. z.B. Gylcerin, 1,2-Propandiol, Glykole wie Polyethylenglykol (z.B. PEG 200 oder PEG 400))
- Gleitadditive, die zur Einstellung der Oberflächenglätte eingesetzt werden (wie z.B. TEGO® Glide 482 von Evonik Industries AG)
- Korrosionsschutzmittel, die zur Minimierung von Korrosion in Farb- bzw. Lackführenden Applikationsgeräten, Lager- oder Transportbehältnissen oder Dosieranlagen eingesetzt werden (wie z.B. COBRATEC® 99 der Raschig GmbH).
- Marker, die beispielsweise für Schnittlinienmarkierung, als Sicherheitsmerkmal oder zur Überprüfung der Applikationsqualität (vor allem bei nicht pigmentierten Systemen) eingesetzt werden (wie z.B. die unter dem Markennahmen Blankophor® vertriebenen Produkte der Blankophor GmbH & Co. KG)
- Mikroverkapselte Wirkstoffe, wie z.B. die mikroverkapselten Duftstoffe FOLCO SCENT® der Follmann GmbH & Co KG
- Weichmacher, die zur nachhaltigen Flexibilisierung der applizierten Farb- bzw. Lackschichten dienen (wie z.B. Elatur® CH der Evonik Industries AG)
- Haftvermittler für schwierige Substrate (wie z.B. ADDID® 900 von Evonik Industries für die Haftungsverbesserung auf Substraten wie Glas oder Aluminium)
- Leitfähigkeitsadditive für die Modifikation der Oberflächenleitfähigkeit von applizierten Farb- und Lackschichten (wie z.B. ADDID® 240 von Evonik Industries AG)
- Additive für spezielle Oberflächeneffekte (TEGO® Hammer 501 von Evonik Industries AG für die Erzielung des sogenannten Hammerschlag-Effektes bei Farben und Lacken)
- Hydrophobierungsmittel, die zur Erzielung eines wasserabweisenden Effektes der applizierten Farb- bzw. Lackschichten dienen (wie z.B. TEGO® Phobe 1650 von Evonik Industries AG
- sowie bevorzugt alle weiteren für die in dieser Schrift beschriebenen Anwendungen vorteilhaft einsetzbaren Komponenten.

Weitere vorstellbare Zusammensetzungen enthalten
a) 0,1 bis 20 Gew.-%, bevorzugt 0,5 bis 1,5 Gew.-% mindestens einer Verbindung der Formeln (I) oder (II)
b) 0,0 bis 75 Gew.-%, bevorzugt 2 bis 50 Gew.-%, besonders bevorzugt 4 bis 25 Gew.-% mindestens eines Pigments, bevorzugt mindestens eines Pigmentes ausgewählt aus der Gruppe aus Pigment White 6 (Titandioxid sowohl in der Rutil- als auch in der Anatas-Variante), Pigment Black 7 (Ruß), Pigment Blue 15:3 bzw. Pigment Blue 15:4 (Phthalocyanin-Pigmente), Pigment Red 57:1 (verlacktes BONA-Pigment (BONA = beta-oxynaphthoic acid)), Pigment Yellow 12, Pigment Yellow 13, (Diarylidgelb- und Diarylidorange-Pigmente), Pigment Violet 23 (Dioxazine Pigment) und/oder Pigment Green 7 (Phthalocyanin-Pigment),
c) 0,5 bis 80 Gew.-%, bevorzugt 2 bis 40 Gew.-%, besonders bevorzugt 7 bis 30 Gew.-% mindestens eines Bindemittels
d) 0,0 bis 10 Gew.-%, bevorzugt 0,5 bis 5 Gew.-%, besonders bevorzugt 1 bis 2 Gew.-% mindestens eines Wachses
e) 0,5 bis 80 Gew.-%, bevorzugt 10 bis 60 Gew.-%, besonders bevorzugt 20 bis 50 Gew.-% mindestens eines Lösemittels, bevorzugt mindestens eines Lösemittels ausgewählt aus Wasser, Ethanol, Isopropanol und/oder Ethylacetat,
f) 0,5 bis 70 Gew.-%, bevorzugt 1 bis 10Gew.-%, besonders bevorzugt 1 bis 3 Gew.-% mindestens eines Filmbildehilfsmittels
g) 0,0 bis 10 Gew.-%, bevorzugt 0,2 bis 5 Gew.-%, besonders bevorzugt 0,5 bis 2 Gew.-% mindestens eines Rheologieadditives
h) 0,0 bis 5 Gew.-%, bevorzugt 0,05 bis 2 Gew.-%, besonders bevorzugt 0,2 bis 1 Gew.-% mindestens eines Entschäumers
i) 0,0 bis 15 Gew.-%, bevorzugt 0,1 bis 10 Gew.-%, besonders bevorzugt 0,2 bis 5 Gew.-% mindestens eines Neutralisationsmittels
j) 0,0 bis 25 Gew.-%, bevorzugt 0,1 bis 10 Gew.-%, besonders bevorzugt 0,2 bis 5 Gew.-% mindestens einer der unter j aufgeführten Komponenten
wobei die Summe aller Komponenten 100 Gew.-% ergibt und alle Gew.-% bezogen sind auf das Gesamtgewicht der Zusammensetzung.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.
Gewichtsmittlere und zahlenmittlere Molekulargewichte werden im Rahmen dieser Erfindung für die hergestellten Eugenol-basierten Polyether kalibriert gegen einen Polypropylenglykolstandard sowie die Eugenol-Polyether enthaltenden Polysiloxane kalibriert gegen einen Polystyrolstandard durch Gelpermeationschromatographie (GPC) bestimmt. Die GPC wurde durchgeführt auf einem Agilent 1100 ausgestattet mit einem RI-Detektor und einer SDV 1000/10000 Å Säulenkombination bestehend aus einer 0,8 cm x 5 cm Vorsäule und zwei 0,8 cm x 30 cm Hauptsäulen bei einer Temperatur von 30°C und einer Fließrate von 1 mL/min (mobile Phase: THF). Die Probenkonzentration betrug 10 g/L und das Injektionsvolumen 20 µL.

Die NMR-Spektren wurden mit einem 400 MHz Spektrometer der Firma Bruker unter Einsatz eines 5 mm QMP-Kopfes gemessen. Es wurden quantitative NMR-Spektren in Gegenwart eines geeigneten Beschleunigungsagenzes gemessen. Die zu untersuchende Probe wurde in einem geeigneten deuterierten Lösungsmittel (Methanol, Chloroform) gelöst und in 5 mm oder ggf. 10 mm NMR-Röhrchen überführt.

Die nasschemische Analytik wurde in Anlehnung an internationale Standardmethoden durchgeführt: lodzahl (IZ; DGF C-V 11 a (53); Säurezahl (SZ; DGF C-V 2); OH-Zahl (ASTM D 4274 C).

Die dynamische Oberflächenspannung wurde mit einem Blasendrucktenisometer f10 der Firma SITA wie folgt gemessen: Es wurde eine 0,5 %ige Lösung der zu messenden Substanz in vollentsalztem Wasser hergestellt. Nach einer Ruhezeit von 24 Stunden wurden die Proben in einem Frequenzbereich von 10 bis 1 Hz vermessen. Das Tensiometer wurde vor jeder Messreihe mit vollentsalztem Wasser kalibriert.

Die statische Oberflächenspannung wurde mit einem Tenisometer K100 der Firma Krüss in Anlehnung an DIN EN 14370 gemessen.

### Beispiel 1: Synthese eines Eugenol-basierten Polyethers (erfindungsgemäß):

In einem 5 Liter Autoklaven wurden 351 g Eugenol vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 100 °C erhitzt und auf ca. 20 mbar evakuiert, um leichtflüchtige Komponenten zu entfernen. Nach 30 min wurde die Temperatur auf 130°C erhöht und zur Aktivierung des Katalysators 100 g Propylenoxid in den evakuierten Reaktor dosiert. Der Innendruck stieg zunächst auf ca. 0,8 bar an. Der Druck begann langsam zu sinken und war nach ca. 7 min auf -0,1 bar gesunken. Nun wurden weitere 50 g PO zudosiert woraufhin der Druck erneut auf 0,8 bar stieg. Nach 12 Minuten war der Druck auf -0,1 bar gefallen und es wurden erneut 50 g PO zudosiert. Nachdem der Druck auf 0 bar gefallen war wurde begonnen PO langsam kontinuierlich zuzudosieren. Nachdem insgesamt 210 g PO zudosiert waren fiel der Druck schlagartig auf -0,9 bar ab, was als Zeichen gewertet wurde, dass die Reaktion nun richtig angesprungen war. Nun wurden innerhalb von ca. 10 Minuten kontinuierlich 38 g Propylenoxid zudosiert. Es schloss sich eine einstündige Nachreaktion an. Dann wurde kontinuierlich ein Gemisch aus 1110 g EO und 1290 g PO so zudosiert, dass die Temperatur konstant blieb. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 40,2 mg KOH/g aufwies sowie eine SZ von 0,1 mg KOH/g. Das Molgewicht laut OH-Zahl betrug 1395 g/mol. Laut GPC betrug M_{w} = 1394 g/mol, Mₙ = 1316 g/mol und der PDI betrug 1,06.

### Beispiel 2: Synthese eines Eugenol-basierten Polyethers (erfindungsgemäß):

In einem 5 Liter Autoklaven wurden 164,2 g Eugenol vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 100 °C erhitzt und auf ca. 20 mbar evakuiert, um leichtflüchtige Komponenten zu entfernen. Nach 30 min wurde die Temperatur auf 130°C erhöht und zur Aktivierung des Katalysators 70 g Propylenoxid in den evakuierten Reaktor dosiert. Der Innendruck stieg zunächst auf ca. 0,8 bar an. Der Druck begann langsam zu sinken und war nach ca. 30 min auf -0,4 bar gesunken. Nun wurden mit einer langsamen kontinuierlichen Zugabe von Propylenoxid begonnen. Nach der Zugabe weiterer 56 g PO stieg der Druck auf 0,7 bar an und fiel schließlich nach der Zugabe von 200 g PO-Gesamtmenge schlagartig auf -0,8 bar ab, was als Zeichen gewertet wurde, dass die Reaktion nun richtig angesprungen war. Nun wurden kontinuierlich 1673 g Propylenoxid so zudosiert, dass die Temperatur konstant blieb. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 26,8 mg KOH/g aufwies sowie eine SZ von 0,1 mg KOH/g. Das Molgewicht laut OH-Zahl betrug 2093 g/mol. Laut GPC betrug M_{w} = 1957 g/mol, Mₙ = 1830 g/mol und der PDI betrug 1,07.

### Beispiel 3: Synthese eines Eugenol-basierten Polyethers (erfindungsgemäß):

In einem 5 Liter Autoklaven wurden 544 g Eugenol vorgelegt und mit 200 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 80 °C erhitzt und auf ca. 20 mbar evakuiert, um leichtflüchtige Komponenten zu entfernen. Nach 30 min wurde die Temperatur auf 140°C erhöht und zur Aktivierung des Katalysators 80 g Propylenoxid in den evakuierten Reaktor dosiert. Der Innendruck stieg zunächst auf ca. 0,6 bar an. Der Druck begann langsam zu sinken und war nach ca. 10 min auf -0,2 bar gesunken. Nun wurden weitere 74 g PO zudosiert woraufhin der Druck langsam innerhalb von 60 Minuten auf -0,8 bar abfiel. Nun wurde begonnen ein Gemisch aus 612 g Ethylenoxid und 691 g Propylenoxid zuzudosieren. Innerhalb von 30 Minuten wurden 110 g des EO/PO-Gemisches zudosiert, woraufhin der Druck im Reaktor auf 0,5 bar stieg. Dann wurden in 15 Minuten weitere 54 g des Gemisches zugesetzt. Der Druck stieg bis zu 1,5 bar an und fiel dann schlagartig auf -0,5 bar ab, was als Zeichen gewertet wurde, dass die Reaktion nun richtig angesprungen war. Nun wurden innerhalb von 40 Minuten kontinuierlich die restlichen Mengen des Alkylenoxidgemisches (1139 g) zudosiert. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 81,8 mg KOH/g aufwies sowie eine SZ von 0,1 mg KOH/g. Das Molgewicht laut OH-Zahl betrug 685 g/mol. Laut GPC betrug M_{w} = 640 g/mol, Mₙ = 583 g/mol und der PDI betrug 1,10.

### Beispiel 4: Synthese eines Eugenol-basierten Polyethers (erfindungsgemäß):

In einem 5 Liter Autoklaven wurden 503 g Eugenol vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 120 °C erhitzt und auf ca. 20 mbar evakuiert, um leichtflüchtige Komponenten zu entfernen. Nach 30 min wurde die Temperatur auf 130°C erhöht und zur Aktivierung des Katalysators 70 g Propylenoxid in den evakuierten Reaktor dosiert. Der Innendruck stieg zunächst auf ca. 0,5 bar an. Der Druck begann langsam zu sinken und war nach ca. 20 min auf -0,9 bar gesunken. Nun wurden langsam, in einem Zeitraum von 40 Minuten 196 g PO zudosiert woraufhin der Druck auf 0,5 bar anstieg. Nach einer dreißig minütigen Nachreaktion sank der Druck auf -0,4 bar und es wurde begonnen ein Gemisch aus 1078 g EO und 1154 g PO zuzudosieren. Innerhalb von 30 Minuten wurden 60 g des EO/PO-Gemisches zudosiert, woraufhin der Druck im Reaktor zunächst in den leichten Überdruck stieg und dann schlagartig auf -0,9 bar abfiel, was als Zeichen gewertet wurde, dass die Reaktion nun richtig angesprungen war. Nun wurden innerhalb von 75 Minuten kontinuierlich die restlichen Mengen des Alkylenoxidgemisches (2172 g) zudosiert. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 51,6 mg KOH/g aufwies sowie eine SZ von 0,1 mg KOH/g. Das Molgewicht laut OH-Zahl betrug 1087 g/mol. Laut GPC betrug M_{w} = 1012 g/mol, Mₙ = 945 g/mol und der PDI betrug 1,07.

### Beispiel 5: Acetylierung eines Eugenol-basierten Polyethers aus Beispiel 1 (erfindungsgemäß):

Unter Schutzgas wurde in einem 2 Liter Dreihals-Kolben ausgestattet mit Tropftrichter und Rückflußkühler der Eugenol-basierte Polyether aus Beispiel 1 zusammen mit katalytischen Mengen an konz. Salzsäure vorgelegt und erwärmt. Dann wurde langsam Essigsäureanhydrid zugegeben. Nach kompletter Addition wurde das Gemisch noch 4 h gerührt. Dann wurden gegebenenfalls vorhandene Säurereste abdestilliert und es wurde ein farbloses bis gelbliches Produkt erhalten, dass eine OH-Zahl von 0,1 mg KOH/g aufwies sowie eine SZ von 0,1 mg KOH/g. Die OH-Zahl deutet im Rahmen der Meßungenauigkeiten der Analytik auf eine quantitative Acetylierung der terminalen OH-Gruppen des Polyethers hin. Das GPC im Vergleich zum Polyether aus Beispiel 1 blieb im Rahmen der Meßungenauigkeiten zweier unabhängiger Messungen gleich. Laut GPC betrug M_{w} = 1424 g/mol, Mₙ = 1316 g/mol und der PDI betrug 1,08.

### Beispiel 6: Methylierung eines Eugenol-basierten Polyethers (erfindungsgemäß):

Unter Schutzgas wurde in einem 2 Liter Dreihals-Kolben ausgestattet mit Tropftrichter und Rückflußkühler der Eugenol-basierte Polyether aus Beispiel 1 zusammen mit überschüssiger Menge an Natriummethylat versetzt und erwärmt. Dann wurde Methanol im Vakuum abdestilliert und Methylchlorid eingeleitet. Nach kompletter Addition wurde das Gemisch noch 4 h gerührt. Das Produkt wurde mit verdünnter Phosphorsäure neutralisiert. Das Wasser wurde im Vakuum abdestilliert und die entstanden Salze abfiltriert und es wurde ein gelbliches Produkt erhalten, welches einem Isoeugenol-Polyether entspricht, der eine OH-Zahl von 1,0 mg KOH/g aufwies sowie eine SZ von 0,1 mg KOH/g. Die OH-Zahl deutet im Rahmen der Meßungenauigkeiten der Analytik auf einen nahezu quantitativen Methylierungsgrad der terminalen OH-Gruppen des Polyethers von 97,5% hin. Das GPC im Vergleich zum Polyether aus Beispiel 1 blieb im Rahmen der Meßungenauigkeiten zweier unabhängiger Messungen gleich. Laut GPC betrug M_{w} = 1416 g/mol, Mₙ = 1324 g/mol und der PDI betrug 1,07.

### Beispiel 7: Phosphorilierung eines Eugenol-basierten Polyethers (erfindungsgemäß):

1395 g Eugenol-basierte Polyether aus Beispiel 1 wurden im Reaktor vorgelegt und nach Zugabe von etwa 50 ml Toluol auf 110°C erhitzt. Durch Anlegen von Vakuum wurden alle flüchtigen Anteile, insbesondere evtl. im Produkt vorhandenes Wasser, aus dem Reaktionsraum destillativ entfernt. Nach dem Belüften mit Stickstoff temperierte man auf 80°C und gab 85 g flüssige Polyphosphorsäure (0,25 Mol P₄O₁₀; Hersteller: Merck; Gehalt als P₄O₁₀ berechnet: ca. 85%) hinzu. Nach 2 Stunden war die Reaktion abgeschlossen. Im ¹H-NMR-Spektrum war keine aliphatische Hydroxylgruppe mehr nachweisbar.

### Beispiel 8a: Synthese eines Isoeugenol-basierten Polyethers mittels alkalischer Katalyse aus Eugenol (erfindungsgemäß):

Die Einwaagen der Synthese entsprachen denen von Beispiel 1. In einem 5 Liter Autoklaven wurde Eugenol zusammen mit 8-Mol-% Kaliummethylat vorgelegt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 100 °C erhitzt und auf ca. 20 mbar evakuiert, um das Methanol aus dem Katalyseschritt zu entfernen. Dann wurden bei einer Temperatur von 115°C 248 g PO dergestalt angelagert, dass der Druck im Reaktor nicht über 2 bar ü Anstieg. Anschließend wurde kontinuierlich ein Gemisch aus 1110 g EO und 1290 g PO so zudosiert, dass die Temperatur konstant blieb und der Druck nicht über 2 bar ü anstieg. Nach beiden Additionsblöcken wurde zunächst gewartet bis der Druck nicht weiter sank, was als Zeichen eines nahezu quantitativen Umsatzes der Alkylenoxide gewertet wurde. Zur Vervollständigung des Alkylenoxidumsatzes wurde sowohl nach dem ersten PO-Block als auch nach dem statistischen EO/PO-Block noch eine einstündige Nachreaktion durchgeführt. Abschließend wurde das Reaktionsgemisch durch Anlegen eines Drucks (P < 20 mbar) desodoriert, um Spuren an nicht umgesetztem Alkylenoxid zu entfernen. Anschließend wurde der Polyether mit verdünnter Phosphorsäure neutralisiert und mit 500 ppm ANOX 20 AM stabilisiert. Anschließend wurde das Wasser bei 120°C destillativ im Vakuum entfernt und die ausgefallenen Salze abfiltriert. Es wurde ein farbloses bis gelbliches Produkt erhalten, dass eine OH-Zahl von 41,3 mg KOH/g aufwies sowie eine SZ von 0,2 mg KOH/g. Das Molgewicht laut OH-Zahl betrug 1358 g/mol. Laut GPC betrug M_{w} = 1370 g/mol, Mₙ = 1248 g/mol und der PDI betrug 1,10.

### Beispiel 8b: Synthese eines Isoeugenol-basierten Polyethers mittels alkalischer Katalyse aus Isoeugenol (erfindungsgemäß):

Es wurde (1:1) die Synthese von Beispiel 7a durchgeführt, jedoch mit dem Unterschied, dass statt Eugenol die gleiche Menge Isoeugenol eingesetzt wurde. Es wurde ein gelblicher Isoeugenol-Polyether erhalten, der eine OH-Zahl von 39,8 mg KOH/g aufwies sowie eine SZ von 0,3 mg KOH/g. Das Molgewicht laut OH-Zahl betrug 1410 g/mol. Laut GPC betrug M_{w} = 1393 g/mol, Mₙ = 1675 g/mol und der PDI betrug 1,27.

### Beispiel 9: Herstellung eines Polyethersiloxans mit Eugenol-basiertem Polyether (erfindungsgemäß):

In einem 500 mL-Dreihalskolben mit Thermometer, Rückflußkühler und KPG-Rührer wurden 79,0 g eines SiH-funktionellen Siloxanes der allgemeinen Formel [Me₂SiHO_{1/2}]₂ [Me₂SiO_{2/2}]₃₇ [MeSiHO_{2/2}]₃ mit 171 g des Eugenol-basierten Polyethers aus Beispiel 4 versetzt. Die Mischung wurde gerührt und auf 90 °C erhitzt. Anschließend wurde das Reaktionsgemisch mit 0,17 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 10: Herstellung eines Polyethersiloxans mit Eugenol-basiertem Polyether (erfindungsgemäß):

In einem 500 mL-Dreihalskolben mit Thermometer, Rückflußkühler und KPG-Rührer wurden 44,3 g eines SiH-funktionellen Siloxanes der allgemeinen Formel [Me₃SiO_{1/2}]₂ [Me₂SiO_{2/2}]₁₃ [MeSiHO_{2/2}]₅ mit 205,7 g des Eugenol-basierten Polyethers aus Beispiel 4 versetzt. Die Mischung wurde gerührt und auf 90 °C erhitzt. Anschließend wurde das Reaktionsgemisch mit 0,17 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 11: Herstellung eines Polyethersiloxans mit Eugenol-basiertem und nicht-Eugenol basiertem Polyether (erfindungsgemäß):

In einem 500 mL-Dreihalskolben mit Thermometer, Rückflußkühler und KPG-Rührer wurden 40,0 g eines SiH-funktionellen Siloxanes der allgemeinen Formel [Me₃SiO_{1/2}]₂ [Me₂SiO_{2/2}]₁₃ [MeSiHO_{2/2}]₅ mit 94,8 g des Eugenol- basierten Polyethers aus Beispiel 4 sowie 132,7 g eines Polyethers der allgemeinen Formel CH₂=CHCH₂O-(CH₂CH₂O)₁₃(CH₂CH(CH₃)O)₁₃Me versetzt. Die Mischung wurde gerührt und auf 90 °C erhitzt. Anschließend wurde das Reaktionsgemisch mit 0,18 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 12: Herstellung eines Polyethersiloxans mit Eugenol-basiertem Polyether (erfindungsgemäß):

In einem 500 mL-Dreihalskolben mit Thermometer, Rückflußkühler und KPG-Rührer wurden 112,0 g eines SiH-funktionellen Siloxanes der allgemeinen Formel [Me₂SiHO_{1/2}]₂ [Me₂SiO_{2/2}]₂₈ mit 138,0 g des Eugenol-basierten Polyethers aus Beispiel 4 versetzt. Die Mischung wurde gerührt und auf 90 °C erhitzt. Anschließend wurde das Reaktionsgemisch mit 0,17 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 13: Herstellung eines Polyethersiloxans mit Eugenol-basiertem Polyether (erfindungsgemäß):

In einem 500 mL-Dreihalskolben mit Thermometer, Rückflußkühler und KPG-Rührer wurden 32,6 g eines SiH-funktionellen Siloxanes der allgemeinen Formel [Me₃SiO_{1/2}]₂ [MeSiHO_{2/2}]₁ mit 267 g des Eugenol-basierten Polyethers aus Beispiel 1 versetzt. Die Mischung wurde gerührt und auf 90 °C erhitzt. Anschließend wurde das Reaktionsgemisch mit 0,2 g einer Lösung des Karstedt-Katalysators (CAS Nummer: 68478-92-2) in Xylol (1,5 % Pt) versetzt. Es wurde eine exotherme Reaktion beobachtet. Die Mischung wurde fünf Stunden lang gerührt. Man erhielt eine gelbliche klare, einphasige Flüssigkeit.

### Beispiel 14: Herstellung eines Polyethersiloxans mit Eugenol-basiertem Polyether (erfindungsgemäß):

In einem 500 mL-Dreihalskolben mit Thermometer, Rückflußkühler und KPG-Rührer wurden 50,0 g eines SiH-funktionellen Siloxanes der allgemeinen Formel [Me₃SiO_{1/2}]₂ [Me₂SiO_{2/2}]_{1,75}[MeSiHO_{2/2}]_{1,25} mit 257 g des Eugenol-basierten Polyethers aus Beispiel 1 versetzt. Die Mischung wurde gerührt und auf 90 °C erhitzt. Anschließend wurde das Reaktionsgemisch mit 0,2 g einer Lösung des Karstedt-Katalysators (CAS Nummer: 68478-92-2) in Xylol (1,5 % Pt) versetzt. Es wurde eine exotherme Reaktion beobachtet. Die Mischung wurde fünf Stunden lang gerührt. Man erhielt eine gelbliche klare, einphasige Flüssigkeit.

### Beispiel 15: Herstellung eines Polyethersiloxans mit Eugenol-basiertem und nicht-Eugenol basiertem Polyether (erfindungsgemäß):

In einem 500 mL-Dreihalskolben mit Thermometer, Rückflußkühler und KPG-Rührer wurden 150 g eines SiH-funktionellen Siloxanes der allgemeinen Formel [Me₃SiO_{1/2}]₂ [Me₂SiO_{2/2}]₁₁₃ [MeSiHO_{2/2}]₅ mit 45,9 g des Eugenol- basierten Polyethers aus Beispiel 4 sowie 55,1 g eines Polyethers der allgemeinen Formel CH₂=CHCH₂O-(CH₂CH₂O)₁₃(CH₂CH(CH₃)O)₂H versetzt. Die Mischung wurde gerührt und auf 90 °C erhitzt. Anschließend wurde das Reaktionsgemisch mit 0,15 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche, leicht trübe Flüssigkeit.

### Beispiel 16: Herstellung eines Polyethersiloxans mit Eugenol-basiertem Polyether und Dodecen (erfindungsgemäß):

In einen 1-L-Dreihals-Kolben wurden 164 g eines SiH-funktionellen Siloxans der allgemeinen Formel Me₃SiO[SiMe₂O]₇₀[SiHMeO]₂₀SiMe₃ vorgelegt. Es wurde auf 80°C geheizt und 6 mg Pt in Form des Karstedt-Katalysators zugesetzt. Dann wurden 44 g 1-Dodecen langsam zugetropft. Danach wurden 424 g des Polyethers aus Beispiel 4 langsam zudosiert. Das Reaktionsgemisch wurde 2 h bei 80°C weiter gerührt. Es wurde ein klares homogenes Alkyl- und Polyether-modifiziertes Siloxan erhalten.

### Beispiel 17: Vorscreening:

Für das Vorscreening wurden verschiedene synthetisierte Netzmittel sowie Referenzprodukte mit einem Anteil von 0,5% in vier vereinfachte Modelfarben (TS 162/03 bis TS 162/06) eingearbeitet.

| **Bezeichnung** | **Hersteller** | **Typ** | **TS162/03** | **TS162/04** | **TS162/05** | **TS162/06** |
|---|---|---|---|---|---|---|
| Pigmentbase Cyan | | Pigmentbase | 5 | 5 | 5 | 5 |
| Ansetzfirnis TS 128/011 | Indulor | Bindemittel | | 30 | | |
| Ansetzfirnis TS 128/003 | BASF | Bindemittel | | | 30 | |
| Joncryl® 90 | BASF | Bindemittel | 30 | | | |
| Joncryl® FLX 500 | BASF | Bindemittel | | | | 30 |
| Wasser | | | Rest | Rest | Rest | Rest |

**Rezeptur Ansetzfirnis TS 128/011**

| **Bezeichnung** | **Hersteller** | **Typ** | **Anteil** |
|---|---|---|---|
| Induprint® PAC 504 H | Indulor | Bindemittel | 52,5 |
| TEGO® Foamex 3062 | Evonik | Entschäumer | 0,3 |
| MEA | | Amin | 3,2 |
| Wasser | | Lösemittel | 44,9 |
| | | Summe | 100 |

**Rezeptur Ansetzfirnis TS 128/003**

| **Bezeichnung** | **Hersteller** | **Typ** | **Anteil** |
|---|---|---|---|
| Joncryl® 678 | BASF | Bindemittel | 32 |
| TEGO® Foamex 3062 | Evonik | Entschäumer | 0,3 |
| MEA | | Amin | 7,6 |
| Wasser | | Lösemittel | 60,1 |
| | | Summe | 100 |

**Rezeptur Pigmentbase Cyan (Pigment Blue 15:3)**

| **Bezeichnung** | **Hersteller** | **Typ** | **Anteil** |
|---|---|---|---|
| Irgalite Blue GLO (PB15:3) | BASF | Pigment | 43 |
| TEGO® Dispers 761 W | Evonik | Dispergieradditiv | 1 |
| Ansetzfirnis TS 128/003 | | Bindemittel | 18 |
| TEGO® Foamex 3062 | Evonik | Entschäumer | 0,3 |
| MEA | | Amin | 0,2 |
| 1,2 Propandiol | | Verzögerer | 2 |
| Wasser | | Lösemittel | 35,5 |
| | | Summe | 100 |

Die Rezepturen wurden unter Zugabe von Wasser auf eine Viskosität von 22 bis 25" (DIN 4 Becher bei 20°C) eingestellt.

Die Applikation der Testrezeptur erfolgte mittels Rakelstab (12 µm) auf silikonisierte Folie. Die Beurteilung der Benetzung erfolgte visuell anhand der unter aufgeführten Skala.

| **Bezeichnung** | **TS162/03** | **TS162/04** | **TS162/05** | **TS162/06** |
|---|---|---|---|---|
| Nullprobe | 1 | 1 | 1 | 3 |
| Polyether aus Bsp. 4 | 2 | 4 | 2 | 6 |
| Polyether aus Bsp. 5 | 2 | 2 | 3 | 8 |
| Polyether aus Bsp. 3 | 2 | 2 | 4 | 7 |
| Polyether aus Bsp. 6 | 1 | 2 | 4 | 7 |
| Polyether aus Bsp. 1 | 2 | 2 | 6 | 6 |
| Polyethersiloxan aus Bsp. 13 | 1 | 2 | 4 | 4 |
| Polyethersiloxan aus Bsp. 9 | 2 | 6 | 1 | 5 |
| Polyethersiloxan aus Bsp. 14 | 2 | 2 | 5 | 5 |
| Polyethersiloxan aus Bsp. 10 | 2 | 2 | 3 | 1 |
| LA-S 1297 | 3 | 8 | 4 | 7 |
| Surfynol 104 H | 2 | 2 | 5 | 1 |
| BYK Dynwet 800 | 2 | 2 | 6 | 6 |
| Wet 500 | 2 | 2 | 6 | 7 |

| | | |
|---|---|---|
| Benotung: | 1 | schlechte Benetzung |
| | 5 | mittlere Benetzung |
| | 10 | sehr gute Benetzung |

### Beispiel 18: Anwendungstechnische Evaluierung in der Endanwendung Wellpappe:

Für die Herstellung der Testrezeptur werden 10 % Pigmentbase und 90 % Verschnitt gemischt und durch Zugabe von Wasser auf eine Viskosität von 22 bis 25" (DIN 4 Becher bei 20°C) eingestellt. Die Applikation der Testrezeptur erfolgt mittels Laborandruckgerät (Erichsen Printingproofer oder Schläfli Labratester) oder Schmalbahnflexodruckmaschine (Windmoeller und Hoelscher) auf verschiedene Wellpappsubstrate.

**Rezeptur Ansetzfirnis TS 128/003**

| **Bezeichnung** | **Hersteller** | **Typ** | **Anteil** |
|---|---|---|---|
| Joncryl® 678 | BASF | Bindemittel | 32 |
| TEGO® Foamex 3062 | Evonik | Entschäumer | 0,3 |
| MEA | | Amin | 7,6 |
| Wasser | | Lösemittel | 60,1 |
| | | Summe | 100 |

Zur Herstellung des Ansetzfirnisses werden die flüssigen Komponenten in einem Edelstahlbehälter vorgelegt und unter Rühren (bei einer Drehzahl von 800 UPM mit einem Dissolver) mittels einer Heizplatte auf 70°C erhitzt. Nun wird das Festharz zur Mischung hinzugegeben und anschließend bei 800 UPM mit einem Dissolver solange gerührt, bis das Festharz vollständig neutralisiert ist. Der pH-Wert wird regelmäßig mittels eines kalibrierten pH-Meters überprüft und nötigenfalls Neutralisationsmittel nachdosiert. Ziel pH-Wert 8,2 bis 8,8.**Rezeptur Pigmentbase**

**Cyan (Pigment Blue 15:3)**

| **Bezeichnung** | **Hersteller** | **Typ** | **Anteil** |
|---|---|---|---|
| Irgalite Blue GLO (PB15:3) | BASF | Pigment | 43 |
| TEGO® Dispers 761 W | Evonik | Dispergieradditiv | 1 |
| Ansetzfirnis TS 128/003 | | Bindemittel | 18 |
| TEGO® Foamex 3062 | Evonik | Entschäumer | 0,3 |
| MEA | | Amin | 0,2 |
| 1,2 Propandiol | | Verzögerer | 2 |
| Wasser | | Lösemittel | 35,5 |
| | | Summe | 100 |

Für die Herstellung der Pigmentbase werden die flüssigen Komponenten in einer Weithalsglasflasche vorgelegt und für 5 Minuten bei einer Drehzahl von 800 UPM mit einem Dissolver gerührt. Nun wird das Pigment zur Mischung hinzugegeben und anschließend für 20 Minuten bei 3000 UPM mit einem Dissolver vordispergiert. Anschließend wird zum Ansatz die äquivalente Menge Glasperlen (Durchmesser 2 bis 2,5 mm) gegeben, festverschlossen und für 3 Stunden in einem Lau Disperser (Schüttler) bei 20% Kühlung geschüttelt. Abschließend werden die Glasperlen abgesiebt und die Pigmentbase in eine frische Weithalsglasflasche überführt.

**Verschnitt**

| **Bezeichnung** | **Hersteller** | **Typ** | **Anteil** |
|---|---|---|---|
| Ansetzfirnis TS 128/003 | | Bindemittel | 30 |
| Joncryl 90 | BASF | Bindemittel | 30 |
| Ultralube D816 | Keim Additec | Wachsdispersion | 2 |
| Tego® Foamex 1488 | Evonik | Entschäumer | 0,2 |
| Tego® Foamex 830 | Evonik | Entschäumer | 0,4 |
| Substratnetzmittel | | Substratnetzmittel | 0,5 |
| Dowanol DPnB | Dow | Filmbildehilfsmittel | 2 |
| PEG 400 | | Verzögerer | 1 |
| Wasser | | Lösemittel | 33,9 |
| | | Summe | 100 |

Für die Herstellung des Verschnittes wird das Wasser in einem Edelstahlbehälter vorgelegt und weiteren Komponenten bei einer Drehzahl von 800 UPM mit einem Dissolver unter Rühren zugegeben. Anschließend wird der Ansatz für 20 Minuten bei 800 UPM mit einem Dissolver gerührt. Abschließend wird der Verschnitt in eine frische Weithalsglasflasche überführt.

### Ergebnisse:

Für Druck auf Topliner, weiß. Andruck auf Schmalbahnflexodruckmaschine (Fabrikat: Windmoeller und Hoelscher). Beurteilt wurde das Liegen der Farbe auf dem Bedruckstoff über optische Begutachtung (1 = sehr schlecht bis 10 sehr gut), das Schaumvolumen der Farbe vor und nach Lagerung (zwei Wochen bei 50°C), die statische Oberflächenspannung der Farbe, sowie die Farbwerte.

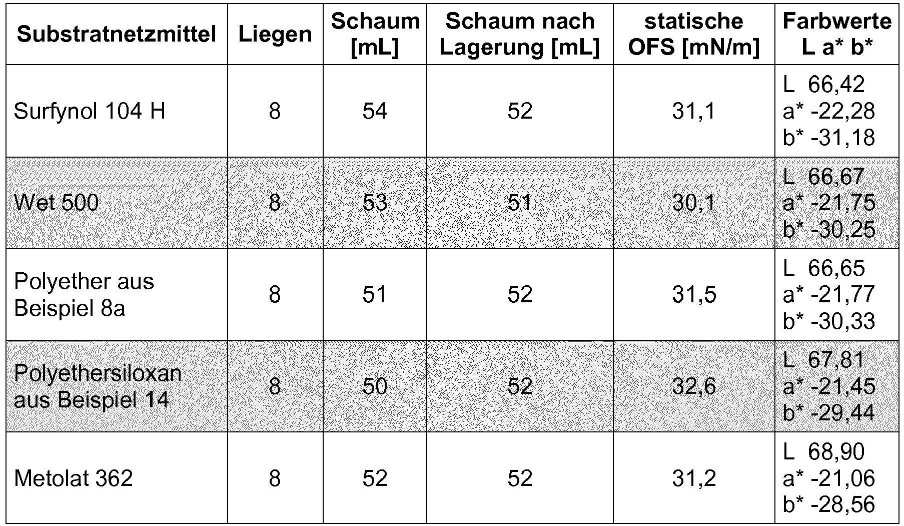

Es zeigte sich, dass beide erfindungsgemäßen Strukturen hinsichtlich des Liegens, der statischen Oberflächenspannung und der Farbwerte vergleichbare Ergebnisse zu typischen im Markt gängigen Substratnetzmitteln liefern. Überraschenderweise zeigte sich, dass die beiden erfindungsgemäßen Strukturen hinsichtlich des Schaumverhaltens bessere Ergebnisse lieferten, als das explizit für seine Schaumarmut bekannte Surfynol 104 H.

### Beispiel 19: Anwendungstechnische Evaluierung in der Endanwendung Linierfarbe:

Für die Herstellung der Testrezeptur werden 30 % Pigmentbase und 70 % Verschnitt gemischt und durch Zugabe von Wasser auf eine Viskosität von 24 bis 28" (DIN 4 Becher bei 20°C) eingestellt. Die Applikation der Testrezeptur erfolgt mittels Laborandruckgerät (Erichsen Printingproofer oder Schläfli Labratester) oder Schmalbahnflexodruckmaschine (Windmoeller und Hoelscher) auf verschiedene für die Anwendung typische Substrate.

**Rezeptur Ansetzfirnis TS 128/003**

| **Bezeichnung** | **Hersteller** | **Typ** | **Anteil** |
|---|---|---|---|
| Joncryl® 678 | BASF | Bindemittel | 32 |
| TEGO® Foamex 3062 | Evonik | Entschäumer | 0,3 |
| MEA | | Amin | 7,6 |
| Wasser | | Lösemittel | 60,1 |
| | | Summe | 100 |

Zur Herstellung des Ansetzfirnisses werden die flüssigen Komponenten in einem Edelstahlbehälter vorgelegt und unter Rühren (bei einer Drehzahl von 800 UPM mit einem Dissolver) mittels einer Heizplatte auf 70°C erhitzt. Nun wird das Festharz zur Mischung hinzugegeben und anschließend bei 800 UPM mit einem Dissolver solange gerührt, bis das Festharz vollständig neutralisiert ist. Der pH-Wert wird regelmäßig mittels eines kalibrierten pH-Meters überprüft und nötigenfalls Neutralisationsmittel nachdosiert. Ziel pH-Wert 8,2 bis 8,8.

**Rezeptur Pigmentbase Schwarz (Pigment Black 7)**

| **Bezeichnung** | **Hersteller** | **Typ** | **Anteil** |
|---|---|---|---|
| Printex 35 (PBk 7) | Orion | Pigment | 43 |
| TEGO® Dispers 761 W | Evonik | Dispergieradditiv | 1 |
| Ansetzfirnis TS 128/003 | | Bindemittel | 18 |
| TEGO® Foamex 3062 | Evonik | Entschäumer | 0,3 |
| MEA | | Amin | 0,2 |
| 1,2 Propandiol | | Verzögerer | 2 |
| Wasser | | Lösemittel | 35,5 |
| | | Summe | 100 |

Für die Herstellung der Pigmentbase werden die flüssigen Komponenten in einer Weithalsglasflasche vorgelegt und für 5 Minuten bei einer Drehzahl von 800 UPM mit einem Dissolver gerührt. Nun wird das Pigment zur Mischung hinzugegeben und anschließend für 20 Minuten bei 3000 UPM mit einem Dissolver vordispergiert. Anschließend wird zum Ansatz die äquivalente Menge Glasperlen (Durchmesser 2 bis 2,5 mm) gegeben, festverschlossen und für 3 Stunden in einem Lau Disperser (Schüttler) bei 20% Kühlung geschüttelt. Abschließend werden die Glasperlen abgesiebt und die Pigmentbase in eine frische Weithalsglasflasche überführt.

**Verschnitt**

| **Bezeichnung** | **Hersteller** | **Typ** | **Anteil** |
|---|---|---|---|
| Ansetzfirnis TS 128/003 | | Bindemittel | 30 |
| Joncryl 90 | BASF | Bindemittel | 5 |
| Vestowax | Evonik | Festwachs | 1 |
| Tego® Foamex 3062 | Evonik | Entschäumer | 0,2 |
| Tego® Foamex 823 | Evonik | Entschäumer | 0,3 |
| Substratnetzmittel | | Substratnetzmittel | 0,5 |
| Dowanol DPnB | Dow | Filmbildehilfsmittel | 30 |
| Wasser | | Lösemittel | 33 |
| | | Summe | 100 |

Für die Herstellung des Verschnittes wird das Wasser in einem Edelstahlbehälter vorgelegt und die weiteren Komponenten bei einer Drehzahl von 800 UPM mit einem Dissolver unter Rühren zugegeben. Anschließend wird der Ansatz für 20 Minuten bei 800 UPM mit einem Dissolver gerührt. Abschließend wird der Verschnitt in eine frische Weithalsglasflasche überführt.

Für Druck auf handelsüblichem Büropapier 80g/m² (Yes bronze copy/print der Firma UPM). Die Applikation der Testrezeptur erfolgt mittels Laborandruckgerät (Erichsen Printingproofer). Beurteilt wurde das Liegen der Farbe auf dem Bedruckstoff über optische Begutachtung (1 = sehr schlecht bis 10 sehr gut) sowie das Schaumvolumen der Farbe vor und nach Lagerung (zwei Wochen bei 50°C).

| **Substratnetzmittel** | **Liegen** | **Schaum [mL]** | **Schaum nach Lagerung [mL]** |
|---|---|---|---|
| Surfynol 104 H | 7 | 56 | 57 |
| Wet 500 | 8 | 54 | 55 |
| Polyether aus Beispiel 1 | 8 | 51 | 52 |
| Polyethersiloxan aus Beispiel 14 | 9 | 51 | 53 |
| Dynwet 800 | 8 | 52 | 53 |

Es zeigte sich, dass mit beiden erfindungsgemäßen Strukturen hinsichtlich des Liegens vergleichbare Ergebnisse zu typischen im Markt gängigen Substratnetzmitteln erzielt werden konnten. Überraschenderweise zeigte sich, dass die beiden erfindungsgemäßen Strukturen hinsichtlich des Schaumverhaltens bessere Ergebnisse lieferten, als das explizit für seine Schaumarmut bekannte Surfynol 104 H.

### Beispiel 20: Anwendungstechnische Evaluierung in der Endanwendung Geschenkpapier:

Für die Herstellung der Testrezeptur werden 20 % Pigmentbase und 80 % Verschnitt gemischt und durch Zugabe von Wasser auf eine Viskosität von 16 bis 18" (DIN 4 Becher bei 20°C) für Tiefdruckapplikation bzw. auf eine Viskosität von 12 bis 25" (DIN 4 Becher bei 20°C) für Flexodruck eingestellt. Die Applikation der Testrezeptur erfolgt mittels Laborandruckgerät (Erichsen Printingproofer oder Schläfli Labratester) oder Schmalbahnflexodruckmaschine (Windmoeller und Hoelscher) auf verschiedene für die Anwendung typische Substrate.

**Rezeptur Ansetzfirnis TS 128/005**

| **Bezeichnung** | **Hersteller** | **Typ** | **Anteil** |
|---|---|---|---|
| Erkamar® 3300 | Robert Kraemer | Bindemittel | 30 |
| TEGO® Foamex 3062 | Evonik | Entschäumer | 0,3 |
| MEA | | Amin | 11 |
| Wasser | | Lösemittel | 58,7 |
| | | Summe | 100 |

Zur Herstellung des Ansetzfirnisses werden die flüssigen Komponenten in einem Edelstahlbehälter vorgelegt und unter Rühren (bei einer Drehzahl von 800 UPM mit einem Dissolver) mittels einer Heizplatte auf 70°C erhitzt. Nun wird das Festharz zur Mischung hinzugegeben und anschließend bei 800 UPM mit einem Dissolver solange gerührt, bis das Festharz vollständig neutralisiert ist. Der pH-Wert wird regelmäßig mittels eines kalibrierten pH-Meters überprüft und nötigenfalls Neutralisationsmittel nachdosiert. Ziel pH-Wert 8,2 bis 8,8.

**Rezeptur Pigmentbase Cyan (Pigment Blue 15:3)**

| **Bezeichnung** | **Hersteller** | **Typ** | **Anteil** |
|---|---|---|---|
| Irgalite Blue GLO (PB15:3) | BASF | Pigment | 43 |
| TEGO® Dispers 761 W | Evonik | Dispergieradditiv | 1 |
| Ansetzfirnis TS 128/005 | | Bindemittel | 18 |
| TEGO® Foamex 3062 | Evonik | Entschäumer | 0,3 |
| MEA | | Amin | 0,2 |
| 1,2 Propandiol | | Verzögerer | 2 |
| Wasser | | Lösemittel | 35,5 |
| | | Summe | 100 |

Für die Herstellung der Pigmentbase werden die flüssigen Komponenten in einer Weithalsglasflasche vorgelegt und für 5 Minuten bei einer Drehzahl von 800 UPM mit einem Dissolver gerührt. Nun wird das Pigment zur Mischung hinzugegeben und anschließend für 20 Minuten bei 3000 UPM mit einem Dissolver vordispergiert. Anschließend wird zum Ansatz die äquivalente Menge Glasperlen (Durchmesser 2 bis 2,5 mm) gegeben, festverschlossen und für 3 Stunden in einem Lau Disperser (Schüttler) bei 20 % Kühlung geschüttelt. Abschließend werden die Glasperlen abgesiebt und die Pigmentbase in eine frische Weithalsglasflasche überführt.

**Verschnitt**

| **Bezeichnung** | **Hersteller** | **Typ** | **Anteil** |
|---|---|---|---|
| Ansetzfirnis TS 128/005 | | Bindemittel | 30 |
| Joncryl 90 | BASF | Bindemittel | 30 |
| Vestowax | Evonik | Festwachs | 1 |
| Tego® Foamex 3062 | Evonik | Entschäumer | 0,5 |
| Tego® Foamex 823 | Evonik | Entschäumer | 0,3 |
| Substratnetzmittel | | Substratnetzmittel | 0,5 |
| Glycerin | | Verzögerer | 1 |
| Wasser | | Lösemittel | 36,7 |
| | | | 100 |

Für die Herstellung des Verschnittes wird das Wasser in einem Edelstahlbehälter vorgelegt und die weiteren Komponenten bei einer Drehzahl von 800 UPM mit einem Dissolver unter Rühren zugegeben. Anschließend wird der Ansatz für 20 Minuten bei 800 UPM mit einem Dissolver gerührt. Abschließend wird der Verschnitt in eine frische Weithalsglasflasche überführt.

Für Druck auf Natronpapier, weiß, 80g/m². Andruck mittels Laborandruckgerät (Schläfli Labratester). Beurteilt wurde das Liegen der Farbe auf dem Bedruckstoff über optische Begutachtung (1 = sehr schlecht bis 10 sehr gut), das Schaumvolumen der Farbe vor und nach Lagerung (zwei Wochen bei 50°C), sowie die statische Oberflächenspannung der Farbe.

| **Substratnetzmittel** | **Liegen** | **Schaum [mL]** | **Schaum nach Lagerung [mL]** | **statische OFS [mN/m]** |
|---|---|---|---|---|
| Surfynol 104 H | 8 | 54 | 52 | 31,4 |
| Wet 500 | 8 | 52 | 51 | 30,6 |
| Polyether aus Beispiel 1 | 8 | 50 | 52 | 31,7 |
| Polyethersiloxan aus Beispiel 14 | 8 | 50 | 52 | 32,4 |
| Metolat 362 | 8 | 52 | 52 | 31,3 |

Es zeigte sich, dass beide erfindungsgemäßen Strukturen hinsichtlich des Liegens, der statischen Oberflächenspannung und der Farbwerte vergleichbare Ergebnisse zu typischen im Markt gängigen Substratnetzmitteln liefern. Überraschenderweise zeigte sich, dass die beiden erfindungsgemäßen Strukturen hinsichtlich des Schaumverhaltens bessere Ergebnisse lieferten, als das explizit für seine Schaumarmut bekannte Surfynol 104 H.

### Beispiel 21: Anwendungstechnische Evaluierung in der Endanwendung Folienverpackung:

Für die Herstellung der Testrezeptur werden 10% Pigmentbase und 90 % Verschnitt gemischt und durch Zugabe von Wasser auf eine Viskosität von 16 bis 18" (DIN 4 Becher bei 20°C) für Tiefdruckapplikation bzw. auf eine Viskosität von 12 bis 25" (DIN 4 Becher bei 20°C) für Flexodruck eingestellt. Die Applikation der Testrezeptur erfolgt mittels Laborandruckgerät (Erichsen Printingproofer oder Schläfli Labratester) oder Schmalbahnflexodruckmaschine (Windmoeller und Hoelscher) auf verschiedene für die Anwendung typische Substrate.

**Rezeptur Ansetzfirnis TS 128/003**

| **Bezeichnung** | **Hersteller** | **Typ** | **Anteil** |
|---|---|---|---|
| Joncryl® 678 | BASF | Bindemittel | 32 |
| TEGO® Foamex 3062 | Evonik | Entschäumer | 0,3 |
| MEA | | Amin | 7,6 |
| Wasser | | Lösemittel | 60,1 |
| | | Summe | 100 |

Zur Herstellung des Ansetzfirnisses werden die flüssigen Komponenten in einem Edelstahlbehälter vorgelegt und unter Rühren (bei einer Drehzahl von 800 UPM mit einem Dissolver) mittels einer Heizplatte auf 70°C erhitzt. Nun wird das Festharz zur Mischung hinzugegeben und anschließend bei 800 UPM mit einem Dissolver solange gerührt, bis das Festharz vollständig neutralisiert ist. Der pH-Wert wird regelmäßig mittels eines kalibrierten pH-Meters überprüft und nötigenfalls Neutralisationsmittel nachdosiert. Ziel pH-Wert 8,2 bis 8,8.

**Rezeptur Pigmentbase Cyan (Pigment Blue 15:3)**

| **Bezeichnung** | **Hersteller** | **Typ** | **Anteil** |
|---|---|---|---|
| Irgalite Blue GLO (PB15:3) | BASF | Pigment | 43 |
| TEGO® Dispers 761 W | Evonik | Dispergieradditiv | 1 |
| Ansetzfirnis TS 128/003 | | Bindemittel | 18 |
| TEGO® Foamex 3062 | Evonik | Entschäumer | 0,3 |
| MEA | | Amin | 0,2 |
| 1,2 Propandiol | | Verzögerer | 2 |
| Wasser | | Lösemittel | 35,5 |
| | | Summe | 100 |

Für die Herstellung der Pigmentbase werden die flüssigen Komponenten in einer Weithalsglasflasche vorgelegt und für 5 Minuten bei einer Drehzahl von 800 UPM mit einem Dissolver gerührt. Nun wird das Pigment zur Mischung hinzugegeben und anschließend für 20 Minuten bei 3000 UPM mit einem Dissolver vordispergiert. Anschließend wird zum Ansatz die äquivalente Menge Glasperlen (Durchmesser 2 bis 2,5 mm) gegeben, festverschlossen und für 3 Stunden in einem Lau Disperser (Schüttler) bei 20 % Kühlung geschüttelt. Abschließend werden die Glasperlen abgesiebt und die Pigmentbase in eine frische Weithalsglasflasche überführt.

**Verschnitt**

| **Bezeichnung** | **Hersteller** | **Typ** | **Anteil** |
|---|---|---|---|
| Joncryl FLX 5000 | BASF | Bindemittel | 50 |
| TEGO® Glide 482 | Evonik | Gleitadditiv | 1 |
| Tego® Foamex 842 | Evonik | Entschäumer | 0,5 |
| Substratnetzmittel | | Substratnetzmittel | 0,5 |
| 1,2 Propandiol | | Verzögerer | 1 |
| TEGO® ViscoPlus 3000 | Evonik | Rheologieadditv | 1,5 |
| Wasser | | Lösemittel | 45,5 |
| | | Summe | 100 |

Für die Herstellung des Verschnittes wird das Wasser in einem Edelstahlbehälter vorgelegt und weiteren Komponenten bei einer Drehzahl von 800 UPM mit einem Dissolver unter Rühren zugegeben. Anschließend wird der Ansatz für 20 Minuten bei 800 UPM mit einem Dissolver gerührt. Abschließend wird der Verschnitt in eine frische Weithalsglasflasche überführt.

Für Druck auf PE-Folie, weiß mit Corona-Vorbehandlung. Andruck auf Schmalbahnflexodruckmaschine (Fabrikat: Windmoeller und Hoelscher). Beurteilt wurde das Liegen der Farbe auf dem Bedruckstoff über optische Begutachtung (1 = sehr schlecht bis 10 sehr gut), das Schaumvolumen der Farbe vor und nach Lagerung (zwei Wochen bei 50°C), die statische Oberflächenspannung der Farbe, sowie die Farbwerte.

| **Substratnetzmittel** | **Liegen** | **Schaum [mL]** | **Schaum nach Lagerung [mL]** | **statische OFS [mN/m]** | **Farbwerte L a* b*** |
|---|---|---|---|---|---|
| Wet 500 | 7 | 52 | 51 | 33,4 | L 68,29 |
| | | | | | a* -32,46 |
| | | | | | b* -38,67 |
| Polyether aus Beispiel 1 | 6 | 49 | 50 | 31,1 | L 68,15 |
| | | | | | a* -32,36 |
| | | | | | b* -38,57 |
| Polyethersiloxan aus Beispiel 14 | 8 | 49 | 50 | 33 | L 68,25 |
| | | | | | a* -32,35 |
| | | | | | b* -38,45 |
| Dynwet 800 | 7 | 50 | 51 | 31,9 | L 68,55 |
| | | | | | a* -32,46 |
| | | | | | b* -38,79 |
| Surfynol 420 | 6 | 54 | 51 | 31,2 | L 68,28 |
| | | | | | a* -32,76 |
| | | | | | b* -38,88 |
| Metolat 362 | 6 | 51 | 51 | 31,5 | L 69,02 |
| | | | | | a* -32,63 |
| | | | | | b* -38,84 |

Es zeigte sich, dass beide erfindungsgemäßen Strukturen hinsichtlich des Liegens, der statischen Oberflächenspannung, das Schaumverhalten vor und nach Lagerung und der Farbwerte vergleichbare bzw. bessere Ergebnisse zu typischen im Markt gängigen Substratnetzmitteln liefern.

### Beispiel 22: Anwendungstechnische Evaluierung in der Endanwendung Tusche und Schreibtinte:

Für die Herstellung der Testrezeptur werden 20 % Pigmentbase und 80 % Verschnitt gemischt und durch Zugabe von Wasser auf eine Viskosität von 22 bis 25" (DIN 4 Becher bei 20°C) eingestellt. Die Applikation der Testrezeptur erfolgt mittels Laborandruckgerät (Schläfli Labratester) oder mittels eines Tuschefüllers der Firma Rotring (Strichbreite 0,35 mm) auf verschiedene für die Anwendung typische Substrate.

**Rezeptur Ansetzfirnis TS 128/005**

| **Bezeichnung** | **Hersteller** | **Typ** | **Anteil** |
|---|---|---|---|
| Erkamar® 3300 | Robert Kraemer | Bindemittel | 30 |
| TEGO® Foamex 3062 | Evonik | Entschäumer | 0,3 |
| MEA | | Amin | 11 |
| Wasser | | Lösemittel | 58,7 |
| | | Summe | 100 |

Zur Herstellung des Ansetzfirnisses werden die flüssigen Komponenten in einem Edelstahlbehälter vorgelegt und unter Rühren (bei einer Drehzahl von 800 UPM mit einem Dissolver) mittels einer Heizplatte auf 70°C erhitzt. Nun wird das Festharz zur Mischung hinzugegeben und anschließend bei 800 UPM mit einem Dissolver solange gerührt, bis das Festharz vollständig neutralisiert ist. Der pH-Wert wird regelmäßig mittels eines kalibrierten pH-Meters überprüft und nötigenfalls Neutralisationsmittel nachdosiert. Ziel pH-Wert 8,2 bis 8,8.

**Rezeptur Pigmentbase Schwarz (Pigment Black 7)**

| **Bezeichnung** | **Hersteller** | **Typ** | **Anteil** |
|---|---|---|---|
| Printex 35 (PBk 7) | Orion | Pigment | 43 |
| TEGO® Dispers 761 W | Evonik | Dispergieradditiv | 1 |
| Ansetzfirnis TS 128/005 | | Bindemittel | 18 |
| TEGO® Foamex 3062 | Evonik | Entschäumer | 0,5 |
| MEA | | Amin | 0,2 |
| Monophenylglykol | | Verzögerer | 2,5 |
| Wasser | | Lösemittel | 34,8 |
| | | Summe | 100 |

Für die Herstellung der Pigmentbase werden die flüssigen Komponenten in einer Weithalsglasflasche vorgelegt und für 5 Minuten bei einer Drehzahl von 800 UPM mit einem Dissolver gerührt. Nun wird das Pigment zur Mischung hinzugegeben und anschließend für 20 Minuten bei 3000 UPM mit einem Dissolver vordispergiert. Anschließend wird zum Ansatz die äquivalente Menge Glasperlen (Durchmesser 2 bis 2,5 mm) gegeben, festverschlossen und für 3 Stunden in einem Lau Disperser (Schüttler) bei 20 % Kühlung geschüttelt. Abschließend werden die Glasperlen abgesiebt und die Pigmentbase in eine frische Weithalsglasflasche überführt.

**Verschnitt**

| **Bezeichnung** | **Hersteller** | **Typ** | **Anteil** |
|---|---|---|---|
| Joncryl 90 | BASF | Bindemittel | 20 |
| Tego® Foamex 830 | Evonik | Entschäumer | 0,4 |
| Dowanol DPNB | Dow | Filmbildehilfsmittel | 5 |
| Substratnetzmittel | | Substratnetzmittel | 0,5 |
| Monophenylglykol | | Verzögerer | 2,5 |
| Wasser | | Lösemittel | 71,6 |
| 100 | | | |

Für die Herstellung des Verschnittes wird das Wasser in einem Edelstahlbehälter vorgelegt und die weiteren Komponenten bei einer Drehzahl von 800 UPM mit einem Dissolver unter Rühren zugegeben. Anschließend wird der Ansatz für 20 Minuten bei 800 UPM mit einem Dissolver gerührt. Abschließend wird der Verschnitt in eine frische Weithalsglasflasche überführt.

Für Applikation auf handelsüblichem Büropapier 80g/m² (Yes bronze copy/print der Firma UPM). Die Applikation der Testrezeptur erfolgt mittels eines Tuschefüllers der Firma Rotring (Strichbreite 0,35 mm). Beurteilt wurde das Schreibverhalten der Farbe auf dem Bedruckstoff über optische Begutachtung (1 = sehr schlecht bis 10 sehr gut) sowie das Schaumvolumen der Farbe vor und nach Lagerung (zwei Wochen bei 50°C).

| **Substratnetzmittel** | **Liegen** | **Schaum [mL]** | **Schaum nach Lagerung [mL]** |
|---|---|---|---|
| Surfynol 104 H | 8 | 54 | 54 |
| Wet 500 | 8 | 53 | 55 |
| Polyether aus Beispiel 1 | 8 | 49 | 51 |
| Polyethersiloxan aus Beispiel 14 | 8 | 49 | 52 |
| Dynwet 800 | 8 | 50 | 52 |

Es zeigte sich, dass beide erfindungsgemäßen Strukturen hinsichtlich des Liegens vergleichbare Ergebnisse zu typischen im Markt gängigen Substratnetzmitteln liefern. Überraschenderweise zeigte sich, dass die erfindungsgemäßen Strukturen hinsichtlich des Schaumverhaltens bessere Ergebnisse lieferten, als das explizit für seine Schaumarmut bekannte Surfynol 104 H.

## Patentansprüche

1. Verwendung Eugenol-basierter Polyether und/oder deren Reaktionsprodukte mit Siloxanen als Substratnetzmittel.

2. Verwendung nach Anspruch 1 als Substratnetzmittel in Druckfarben, Drucklacken und/oder sonstiger mittels analoger oder digitaler Beschichtungsverfahren aufbringbarer Farben oder Lacke.

3. Verwendung nach einem der Ansprüche 1 bis 2 als Substratnetzmittel zur Bedruckung von Folien, Papier, Karton, Wellpappe, Faltschachteln, Tüten, Tapeten, Säcken, Hygienepapier, Getränkekartons, Platten, Holzoberflächen, Metalloberflächen, Kunststoffoberflächen, Glas und/oder Keramik.

4. Verwendung nach einem der Ansprüche 1 bis 3, **dadurch gekennzeichnet, dass** der Eugenol-basierte Polyether der Formel (I) entspricht, 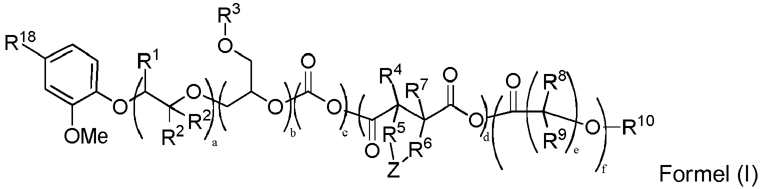 wobei
a = 1 bis 1000, bevorzugt 2 bis 500, besonders bevorzugt 3 bis 500, weiter bevorzugt größer 3 bis 100, insbesondere bevorzugt 4 bis 50,
b = 0 bis 1000, bevorzugt 1 bis 500, weiter bevorzugt größer 1 bis 200, insbesondere bevorzugt 0 bis 50,
c = 0 bis 1000, bevorzugt 1 bis 100, weiter bevorzugt größer 1 bis 80, insbesondere bevorzugt 0 bis 50,
d = 0 bis 1000, bevorzugt 1 bis 100, weiter bevorzugt größer 1 bis 80, insbesondere bevorzugt 0 bis 50,
e = 1 bis 10,
f = 0 bis 500, bevorzugt 1 bis 300, besonders bevorzugt 2 bis 200 und insbesondere bevorzugt 0 bis 100 ist,
mit der Maßgabe, dass die Summe aus a + b + c + d + f größer gleich 3 sein muss und mit der Maßgabe, dass die Gruppen mit den Indices a, b, c, d, und f frei permutierbar über die Molekülkette sind, wobei die Gruppen mit den Indices c und d jeweils nicht auf sich selbst oder auf die jeweils andere Gruppe folgen dürfen
und mit der Maßgabe, dass die verschiedenen Monomereinheiten sowohl der Fragmente mit den Indices a, b und f untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices c und d jeweils nicht auf sich selbst oder auf die jeweils andere Gruppe folgen dürfen,
und wobei
R¹ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
R² = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-,
oder R¹ und einer der Reste R² können gemeinsam einen Ring bilden, der die Atome, an die R¹ und R² gebunden sind, einschließt, bevorzugt enthält dieser Ring 5 bis 8 Kohlenstoffatome,
R³ = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist,
R⁴, R⁷ = unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R⁴ und/oder R⁷ auch nicht vorhanden sein, wobei wenn R⁴ und R⁷ nicht vorhanden sind, statt der Reste R⁴ und R⁷ eine C=C Doppelbindung vorhanden ist,
das überbrückende Fragment Z kann vorhanden oder nicht vorhanden sein, ist das überbrückende Fragment Z nicht vorhanden so sind,
R⁵, R⁶ = unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R⁴ oder R⁷ nicht vorhanden ist, der jeweilige geminale Rest (also R⁵ wenn R⁴ nicht vorhanden ist und R⁶ wenn R⁷ nicht vorhanden ist) ein Alkylidenrest, bevorzugt Methyliden (=CH₂), ist,
ist das überbrückende Fragment Z vorhanden, so sind
R⁵, R⁶ = Kohlenwasserstoffreste, die cycloaliphatisch oder aromatisch über das Fragment Z verbrückt sind, wobei Z einen divalenten Alkylen- oder Alkenylenrest darstellt, der weiter substituiert sein kann,
R⁸, R⁹ = unabhängig voneinander ein Wasserstoffradikal, eine Alkylgruppe mit 1 bis 20 Kohlenstoffatomen, eine Aryl- oder Alkarylgruppe und/oder eine Alkoxygruppe, bevorzugt eine Methylgruppe,
R¹⁰ = unabhängig voneinander ein Wasserstoffradikal oder eine Alkylgruppe mit 1 bis 8 Kohlenstoffatomen oder eine Estergruppe -C(O)-R¹¹ oder eine Acetoacetatgruppe -C(O)-CH₂-C(O)-R¹² oder eine Silylethergruppe -Si(R¹³)₃ oder eine Urethangruppe -C(O)-N-(R¹⁴)₂ oder eine Phosphorsäuregruppe -P(O)-(OR¹⁹)₂ mit
R¹¹, R¹², R¹³ = unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, und
R¹⁴ = unabhängig voneinander Wasserstoff und/oder eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, und
R¹⁸ = unabhängig voneinander Allyl- oder 2-Propenylgruppe und
R¹⁹ = unabhängig voneinander Wasserstoff, Alkylgruppe oder Polyetherrest
bevorzugt handelt es sich bei R¹⁰ um Wasserstoff, eine Methylgruppe, eine AcetylGruppe, eine Phosphorsäuregruppe oder eine Acetoacetat-Gruppe, insbesondere bevorzugt um Wasserstoff oder eine Phosphorsäuregruppe.

5. Verwendung nach einem der Ansprüche 1 bis 3 **dadurch gekennzeichnet, dass** das Reaktionsprodukt des Eugenol-basierten Polyethers mit Siloxanen der Formel (II) entspricht,
M_{g} M'ₕ M"ₙ Dᵢ D'ⱼ D"ₘ Tₖ Qₗ Formel (II)
mit
M = [R¹⁵₃SiO_{1/2}]
M' = [R¹⁶ R¹⁵₂SiO_{1/2}]
M" = [R¹⁷ R¹⁵₂SiO_{1/2}]
D = [R¹⁵₂SiO_{2/2}]
D' = [R¹⁶ R¹⁵SiO_{2/2}]
D" = [R¹⁷ R¹⁵SiO_{2/2}]
T = [R¹⁵SiO_{3/2}]
Q = [SiO_{4/2}]
g = 0 - 20, bevorzugt 0 - 10, insbesondere bevorzugt 2,
h = 0 - 20, bevorzugt 0 - 10, insbesondere bevorzugt 0,
i = 0 - 1000, bevorzugt 0 - 500, insbesondere bevorzugt 0 - 200,
j = 0 - 20, bevorzugt 1 - 15, insbesondere bevorzugt 1 - 10,
k = 0 - 20, bevorzugt 0 - 10, insbesondere bevorzugt 0,
l = 0 - 20, bevorzugt 0 - 10, insbesondere bevorzugt 0,
m = 0 - 20, bevorzugt 1 - 15, insbesondere bevorzugt 0,
n = 0 - 20, bevorzugt 0 - 10, insbesondere bevorzugt 0,
mit der Maßgabe, dass die Summe aus g + h + i + j + k + l + m größer gleich 3, sowie die Summe aus h + j ≥ 1 sein muss
und
R¹⁵ = unabhängig voneinander gleiche oder verschiedene Kohlenwasserstoffreste mit 1 - 16 Kohlenstoffatomen oder H, bevorzugt Methyl, Ethyl oder Phenyl, insbesondere bevorzugt Methyl,
R¹⁶ = unabhängig voneinander gleiche oder verschiedene Polyetherreste, mit der Maßgabe, dass mindestens 10 % der Reste Eugenol-basierten Polyetherreste sind, bevorzugt entsprechen die Eugenol- basierten Polyetherreste der allgemeinen Formel (III) 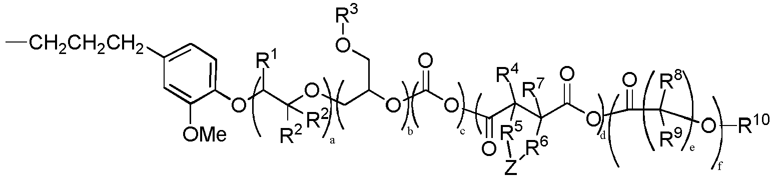 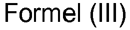
und bevorzugte nicht Eugenol-basierte Polyether entsprechen Resten der allgemeinen Formel (IV), 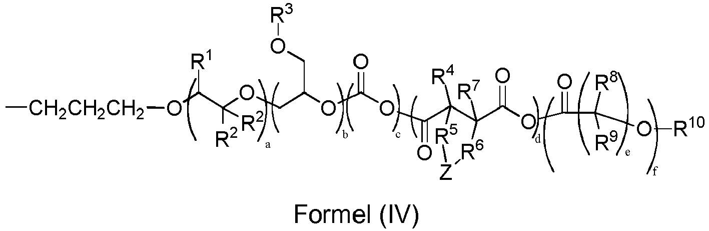 mit den Indices a-f und den Resten R¹-R¹⁰ wie zuvor definiert.
R¹⁷ = unabhängig voneinander gleiche oder verschiedene Kohlenwasserstoffreste mit 1 - 16 Kohlenstoffatomen die auch Heteroatome enthalten und weiter substituiert sein können, bevorzugt handelt es sich um SiC-verknüpfte Reste resultierend aus Allylglycidether, Glycerinmonoallylether, Allylanisol, Eugenol, Hexenol, Hexadecen und Undecylensäuremethylester, insbesondere bevorzugt Hexadecen, Eugenol und Glycerinmonoallylether.

## Claims

1. Use of eugenol-based polyethers and/or reaction products thereof with siloxanes as substrate wetting agents.

2. Use according to Claim 1 as substrate wetting agents in printing inks, printing varnishes and/or other inks or varnishes applicable by means of analogue or digital coating methods.

3. Use according to either of Claims 1 and 2 as substrate wetting agents for printing of films, paper, card, cardboard, folding boxes, bags, wallpaper, sacks, hygiene paper, drinks cartons, boards, wood surfaces, metal surfaces, plastic surfaces, glass and/or ceramic.

4. Use according to any of Claims 1 to 3, **characterized in that** the eugenol-based polyether corresponds to the formula (I) 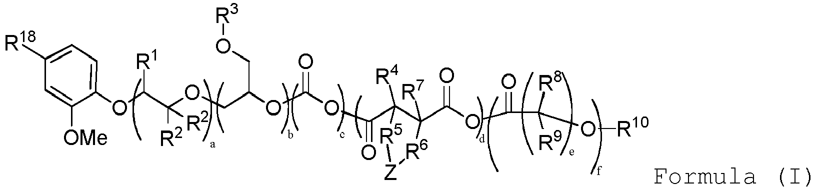 where
a = 1 to 1000, preferably 2 to 500, more preferably 3 to 500, further preferably greater than 3 to 100, especially preferably 4 to 50,
b = 0 to 1000, preferably 1 to 500, further preferably greater than 1 to 200, especially preferably 0 to 50,
c = 0 to 1000, preferably 1 to 100, further preferably greater than 1 to 80, especially preferably 0 to 50,
d = 0 to 1000, preferably 1 to 100, further preferably greater than 1 to 80, especially preferably 0 to 50,
e = 1 to 10,
f = 0 to 500, preferably 1 to 300, more preferably 2 to 200 and especially preferably 0 to 100,
with the proviso that the sum total of a + b + c + d + f is not less than 3 and
with the proviso that the groups with the indices a, b, c, d, and f are freely permutable over the molecule chain and neither of the groups with the indices c and d may follow itself or the respective other group and with the proviso that the different monomer units of the fragments with the indices a, b and f may be in a blockwise structure with one another, where individual blocks may also occur multiple times and may be randomly distributed among one another, or else are subject to a random distribution and further are freely permutable with one another, in the sense that they may be arranged in any desired sequence, subject to the restriction that neither of the groups with the indices c and d may follow itself or the respective other group,
and where
R¹ = independently a hydrogen radical or an alkyl group having 1 to 8 carbon atoms, preferably hydrogen, methyl or ethyl, especially preferably hydrogen,
R² = independently a hydrogen radical, an alkyl group having 1 to 20 carbon atoms, or an aryl or alkaryl group, preferably hydrogen, methyl, ethyl, octyl, decyl, dodecyl, phenyl, benzyl, more preferably hydrogen, methyl or ethyl,
or R¹ and one of the R² radicals may together form a ring including the atoms to which R¹ and R² are bonded, this ring preferably containing 5 to 8 carbon atoms,
R³ = independently a saturated or unsaturated, aliphatic or aromatic, hydrocarbyl radical having 2 to 30 carbon atoms, especially up to 24 carbon atoms, which optionally has further substitution,
R⁴, R⁷ = independently hydrogen and/or an organic radical, preferably alkyl, alkenyl, alkylidene, alkoxy, aryl and/or aralkyl groups, or else R⁴ and/or R⁷ may optionally be absent, where, when R⁴ and R⁷ are absent, there is a C=C double bond in place of the R⁴ and R⁷ radicals,
the bridging Z fragment may be present or absent, where, in the absence of the bridging Z fragment,
R⁵, R⁶ = independently hydrogen and/or an organic radical, preferably alkyl, alkenyl, alkylidene, alkoxy, aryl and/or aralkyl groups, where, when one of the R⁴ and R⁷ radicals is absent, the respective geminal radical (i.e. R⁵ when R⁴ is absent and R⁶ when R⁷ is absent) is an alkylidene radical, preferably methylidene (= CH₂);
where, in the presence of the bridging Z fragment,
R⁵, R⁶ = hydrocarbyl radicals bridged cycloaliphatically or aromatically via the Z fragment, where Z is a divalent alkylene or alkenylene radical which may have further substitution,
R⁸, R⁹ = independently a hydrogen radical, an alkyl group having 1 to 20 carbon atoms, an aryl or alkaryl group and/or an alkoxy group, preferably a methyl group,
R¹⁰ = independently a hydrogen radical or an alkyl group having 1 to 8 carbon atoms or an ester group -C(O)-R¹¹ or an acetoacetate group -C(O)-CH2-C(O)-R¹² or a silyl ether group -Si(R¹³)₃ or a urethane group -C(O)-N-(R¹⁴)₂ or a phosphoric acid group -P(O)-(OR¹⁹)₂ with
R¹¹, R¹², R¹³ = independently a linear or branched, saturated or unsaturated, optionally further substituted alkyl group having 1 to 30 carbon atoms, an aryl or alkaryl group, and
R¹⁴ = independently hydrogen and/or a linear or branched, saturated or unsaturated, optionally further-substituted alkyl group having 1 to 30 carbon atoms, an aryl or alkaryl group, and
R¹⁸ = independently allyl or 2-propenyl group and
R¹⁹ = independently hydrogen, alkyl group or polyether radical,
R¹⁰ preferably being hydrogen, a methyl group, an acetyl group, a phosphoric acid group or an acetoacetate group, especially preferably hydrogen or a phosphoric acid group.

5. Use according to any of Claims 1 to 3, **characterized in that** the reaction product of the eugenol-based polyether with siloxanes corresponds to the formula (II)
M_{g} M'ₕ M"ₙ Dᵢ D'ⱼ D"ₘ Tₖ Q₁ Formula (II)
with
M = [R¹⁵₃SiO_{1/2}]
M' = [R¹⁶ R¹⁵₂SiO_{1/2}]
M'' = [R¹⁷ R¹⁵₂SiO_{1/2}]
D = [R¹⁵₂SiO_{2/2}]
D' = [R¹⁶ R¹⁵SiO_{2/2}]
D" = [R¹⁷ R¹⁵SiO_{2/2}]
T = [R¹⁵SiO_{3/2}]
Q = [SiO_{4/2}]
g = 0-20, preferably 0-10, especially preferably 2,
h = 0-20, preferably 0-10, especially preferably 0,
i = 0-1000, preferably 0-500, especially preferably 0-200,
j = 0-20, preferably 1-15, especially preferably 1-10,
k = 0-20, preferably 0-10, especially preferably 0,
1 = 0-20, preferably 0-10, especially preferably 0,
m = 0-20, preferably 1-15, especially preferably 0,
n = 0-20, preferably 0-10, especially preferably 0,
with the proviso that the sum total of g + h + i + j + k + 1 + m is not less than 3 and that the sum of h + j ≥ 1
and
R¹⁵ = independently identical or different hydrocarbyl radicals having 1-16 carbon atoms or H, preferably methyl, ethyl or phenyl, especially preferably methyl,
R¹⁶ = independently identical or different polyether radicals, with the proviso that at least 10% of the radicals are eugenol-based polyether radicals, the eugenol-based polyether radicals preferably corresponding to the general formula (III) 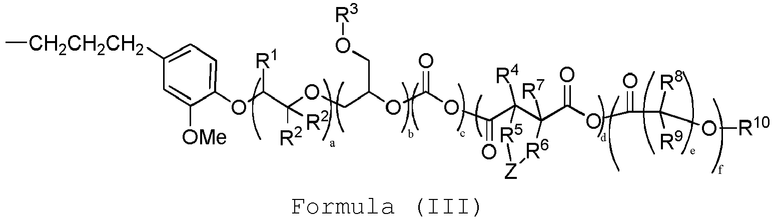
and preferred non-eugenol-based polyethers corresponding to radicals of the general formula (IV) 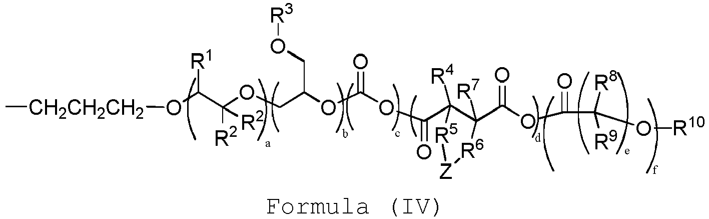 where the indices a-f and the radicals R¹-R¹⁰ are as defined above,
R¹⁷ = independently identical or different hydrocarbyl radicals which have 1-16 carbon atoms and also contain heteroatoms and may have further substitution, preferably SiC-bonded radicals resulting from allyl glycidyl ether, glycerol monoallyl ether, allylanisole, eugenol, hexenol, hexadecene and methyl undecylenoate, especially preferably hexadecene, eugenol and glycerol monoallyl ether.

## Revendications

1. Utilisation de polyéthers à base d'eugénol et/ou de leurs produits de réaction avec des siloxanes comme mouillant de substrat.

2. Utilisation selon la revendication 1 comme mouillant de substrat dans des encres d'impression, des laques d'impression et/ou d'autres encres ou laques pouvant être appliquées au moyen de procédés de revêtement analogiques ou numériques.

3. Utilisation selon l'une quelconque des revendications 1 et 2, comme mouillant de substrat pour l'impression de feuilles, de papier, de carton, de carton ondulé, de boîtes pliantes, de sacs, de tapis, de sachets, de papier hygiénique, de cartons pour boissons, de plaques, de surfaces en bois, de surfaces métalliques, de surfaces en matériau synthétique, de verre et/ou de céramique.

4. Utilisation selon l'une quelconque des revendications 1 à 3, **caractérisée en ce que** le polyéther à base d'eugénol correspond à la formule (I) 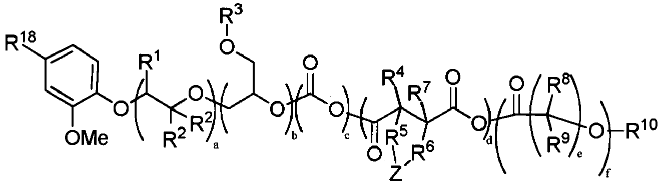 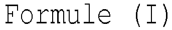 dans laquelle
a = 1 à 1000, de préférence 2 à 500, de manière particulièrement préférée 3 à 500, plus préférablement supérieur à 3 jusqu'à 100, en particulier de préférence 4 à 50,
b = 0 à 1000, de préférence 1 à 500, plus préférablement supérieur à 1 jusqu'à 200, en particulier de préférence 0 à 50,
c = 0 à 1000, de préférence 1 à 100, plus préférablement supérieur à 1 jusqu'à 80, en particulier de préférence 0 à 50,
d = 0 à 1000, de préférence 1 à 100, plus préférablement supérieur à 1 jusqu'à 80, en particulier de préférence 0 à 50,
e = 1 à 10,
f = 0 à 500, de préférence 1 à 300, de manière particulièrement préférée 2 à 200 et en particulier de préférence 0 à 100,
étant entendu que la somme de a+b+c+d+f doit être supérieure ou égale à 3 et étant entendu que les groupes présentant les indices a, b, c, d et f sont permutables librement sur la chaîne de la molécule, les groupes présentant les indices c et d ne pouvant pas se succéder respectivement eux-mêmes ou à succéder chaque fois à l'autre groupe, et étant entendu que les différentes unités monomères des fragments présentant les indices a, b et f peuvent présenter une structure séquencée les uns avec les autres, des blocs individuels pouvant également être présents plusieurs fois et pouvant être statistiquement répartis les uns avec les autres, ou se trouvent dans une répartition statistique et sont en outre à disposer de manière librement permutable les uns avec les autres, c'est-à-dire dans un ordre quelconque, avec comme limitation que les groupes présentant les indices c et d ne peuvent pas se succéder respectivement eux-mêmes ou succéder à chaque fois à l'autre groupe et dans laquelle
R¹ = indépendamment les uns des autres, un radical hydrogène ou un groupe alkyle comprenant 1 à 8 atomes de carbone, de préférence hydrogène, méthyle ou éthyle, en particulier de préférence hydrogène,
R² = indépendamment les uns des autres, un radical hydrogène, un groupe alkyle comprenant 1 à 20 atomes de carbone, un groupe aryle ou alkaryle, de préférence hydrogène, méthyle, éthyle, octyle, décyle, dodécyle, phényle, benzyle, de manière particulièrement préférée hydrogène, méthyle ou éthyle,
ou R¹ et un des radicaux R² peuvent former, conjointement, un cycle qui comprend les atomes auxquels R¹ et R² sont liés, de préférence, ce cycle contient 5 à 8 atomes de carbone,
R³ = indépendamment les uns des autres, un radical hydrocarboné saturé ou insaturé, aliphatique ou aromatique, comprenant 2 à 30 atomes de carbone, en particulier jusqu'à 24 atomes de carbone, qui est éventuellement substitué davantage,
R⁴, R⁷ = indépendamment les uns des autres, hydrogèneet/ou un radical organique, de préférence desgroupes alkyle, alcényle, alkylidène, alcoxy, aryleet/ou aralkyle, ou R⁴ et/ou R⁷ peuvent le cas échéantégalement ne pas être présents, où, lorsque R⁴ et R⁷ne sont pas présents, il existe une double liaisonC=C à la place des radicaux R⁴ et R⁷,
le fragment formant un pont Z peut être présent ou non, si le fragment formant un pont Z n'est pas présent, alors
R⁵, R⁶ = indépendamment les uns des autres, hydrogène et/ou un radical organique, de préférence des groupes alkyle, alcényle, alkylidène, alcoxy, aryle et/ou aralkyle, où, pour le cas où l'un des radicaux R⁴ ou R⁷ n'est pas présent, le radical géminal respectif (donc R⁵ lorsque R⁴ n'est pas présent et R⁶ lorsque R⁷ n'est pas présent) représente un radical alkylidène, de préférence méthylidène (=CH₂),
si le fragment formant un pont Z est présent, alors
R⁵, R⁶ = des radicaux hydrocarbonés qui forment un pont cycloaliphatique ou aromatique via le fragment Z, Z représentant un radical alkylène ou alcénylène divalent, qui peut être substitué davantage,
R⁸, R⁹ = indépendamment les uns des autres, un radical hydrogène, un groupe alkyle comprenant 1 à 20 atomes de carbone, un groupe aryle ou un groupe alkaryle et/ou un groupe alcoxy, de préférence un groupe méthyle,
R¹⁰ = indépendamment les uns des autres, un radical hydrogène ou un groupe alkyle comprenant 1 à 8 atomes de carbone ou un groupe ester -C(O)-R¹¹ ou un groupe acétoacétate -C(O)-CH₂-C(O)-R¹² ou un groupe silyléther -Si(R¹³)₃ ou un groupe uréthane -C(O)-N-(R¹⁴)₂ ou un groupe acide phosphorique -P(O)-(OR¹⁹)₂ où
R¹¹, R¹², R¹³ = indépendamment les uns des autres, un groupe alkyle linéaire ou ramifié, saturé ou insaturé, le cas échéant substitué davantage, comprenant 1 à 30 atomes de carbone, un groupe aryle ou alkaryle et
R¹⁴ = indépendamment les uns des autres, hydrogène et/ou un groupe alkyle linéaire ou ramifié, saturé ou insaturé, le cas échéant substitué davantage, comprenant 1 à 30 atomes de carbone, un groupe aryle ou alkaryle et
R¹⁸ = indépendamment les uns des autres, un groupe allyle ou 2-propényle et
R¹⁹ = indépendamment les uns des autres, hydrogène, un groupe alkyle ou un radical polyéther,
R¹⁰ représente de préférence hydrogène, un groupe méthyle, un groupe acétyle, un groupe acide phosphorique ou un groupe acétoacétate, en particulier de préférence hydrogène ou un groupe acide phosphorique.

5. Utilisation selon l'une quelconque des revendications 1 à 3, **caractérisée en ce que** le produit de réaction du polyéther à base d'eugénol avec des siloxanes correspond à la formule (II)
M_{g} M'ₕ M"ₙ Dᵢ D'ⱼ D"ₘ Tₖ Qₗ Formule (II)
dans laquelle
M = [R¹⁵₃SiO_{1/2}]
M' = [R¹⁶ R¹⁵₂SiO_{1/2}]
M" = [R¹⁷ R¹⁵₂SiO_{1/2}]
D = [R¹⁵₂ SiO_{2/2}]
D' = [R¹⁶ R¹⁵SiO_{2/2}]
D" = [R¹⁷ R¹⁵SiO_{2/2}]
T = [R¹⁵SiO_{3/2}]
Q = [SiO_{4/2}]
g = 0-20, de préférence 0-10, en particulier de préférence 2,
h = 0-20, de préférence 0-10, en particulier de préférence 0,
i = 0-1000, de préférence 0-500, en particulier de préférence 0-200,
j = 0-20, de préférence 1-15, en particulier de préférence 1-10,
k = 0-20, de préférence 0-10, en particulier de préférence 0,
1 = 0-20, de préférence 0-10, en particulier de préférence 0,
m = 0-20, de préférence 1-15, en particulier de préférence 0,
n = 0-20, de préférence 0-10, en particulier de préférence 0,
étant entendu que la somme de g+h+i+j+k+l+m doit être supérieure ou égale à 3, et la somme de h+j doit être ≥ 1 et
R¹⁵ = indépendamment les uns des autres, des radicaux hydrocarbonés identiques ou différents comprenant 1-16 atomes de carbone ou H, de préférence méthyle, éthyle ou phényle, en particulier de préférence méthyle,
R¹⁶ = indépendamment les uns des autres, des radicaux polyéther identiques ou différents, étant entendu qu'au moins 10% des radicaux sont des radicaux polyéther à base d'eugénol, de préférence, les radicaux polyéther à base d'eugénol correspondent à la formule générale (III) 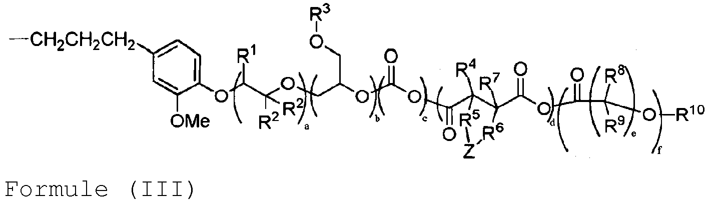
et des polyéthers préférés non à base d'eugénol correspondent à des radicaux de formule générale (IV) 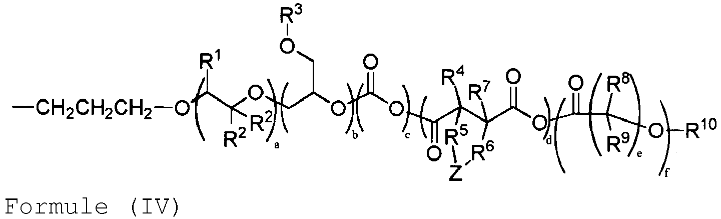 les indices a-f et les radicaux R¹-R¹⁰ étant tels que définis ci-avant,
R¹⁷ = indépendamment les uns des autres, des radicaux hydrocarbonés identiques ou différents comprenant 1-16 atomes de carbone, qui peuvent également contenir des hétéroatomes et être substitués davantage, il s'agit de préférence de radicaux liés par SiC provenant d'allylglycidyléther, de glycérolmonoallyléther, d'allylanisole, d'eugénol, d'hexénol, d'hexadécène et d'ester méthylique de l'acide undécylénoïque, en particulier de préférence d'hexadécène, d'eugénol et de glycérolmonoallyléther.
